# EUROPEAN PATENT SPECIFICATION

(11) **EP 4 385 480 B1**
(45) Date of publication and mention of the grant of the patent: **06.05.2026**
(21) Application number: 22873090.9
(22) Date of filing: 28.07.2022
(51) Int. Cl.: A61H 1/02, B25J 9/00, A63B 23/04, A61H 37/00, A61H 23/02, G08B 6/00

(54) **WEARABLE DEVICE, METHOD, AND NON-TRANSITORY COMPUTER READABLE STORAGE MEDIUM FOR OUTPUTTING TORQUE**
WEARABLE-VORRICHTUNG, VERFAHREN UND NICHTTRANSITORISCHES COMPUTERLESBARES SPEICHERMEDIUM ZUR AUSGABE VON DREHMOMENT
DISPOSITIF PORTABLE, PROCÉDÉ, ET SUPPORT D'ENREGISTREMENT LISIBLE PAR ORDINATEUR NON TRANSITOIRE POUR DÉLIVRER EN SORTIE UN COUPLE

(30) Priority: 25.09.2021 KR 20210126778; 12.10.2021 KR 20210135350
(43) Date of publication of application: 19.06.2024
(73) Proprietor: Samsung Electronics Co., Ltd., Suwon-si, Gyeonggi-do 16677 (KR)
(72) Inventor: JUNG, Minkyu, Suwon-si Gyeonggi-do 16677 (KR); LEE, Seungjoon, Suwon-si Gyeonggi-do 16677 (KR); HAN, Hoon, Suwon-si Gyeonggi-do 16677 (KR)
(74) Representative: Gulde & Partner
(86) International application number: PCT/KR2022/011118
(87) International publication number: WO 2023/048384

(56) References cited:
- JP-A- 2018 103 283
- KR-A- 20210 055 648
- KR-B1- 102 234 788
- US-A1- 2011 205 067
- US-A1- 2018 064 599
- US-A1- 2019 282 428
- US-A1- 2019 283 247
- US-A1- 2019 375 106

## Description

### [Technical Field]

The descriptions below relate to a wearable device, method, and non-transitory computer readable storage medium for outputting torque.

### [Background Art]

Among wearable devices, a walking assistance device is a device that assists a user who has difficulty walking so that the user can easily perform walking. The walking assistance device was developed to relieve inconvenience of walking.

Recently, interest in the walking assistance device for exercise has been increasing. The walking assistance device may occur a load on a movement of the user or reduce the load on the movement of the user. The walking assistance device may be controlled by an electronic device of the user and may operate at an intensity desired by the user.

Document US 2019/0283247 A1 describes systems and methods for monitoring and analyzing biomechanical movements using wearable technology, such as exosuits. The system collects data on various physical parameters (e.g., step length, cadence, knee angles) and employs learning algorithms to predict outcomes like recovery progress or movement efficiency. It integrates components such as sensors, control modules, and feedback mechanisms to assist users, particularly in rehabilitation or performance improvement.

### [Disclosure]

### [Technical Problem]

A wearable device may operate in various operation modes. In case that an operation mode of the wearable device is suddenly changed, injury to a user may occur due to the wearable device. Before the operation mode of the wearable device changes, a method may be required for providing a notification to the user and for gradually changing the operation mode.

The technical problems to be achieved in this document are not limited to those described above, and other technical problems not mentioned herein will be clearly understood by those having ordinary knowledge in the art to which the present disclosure belongs, from the following description.

### [Technical Solution]

The present invention is directed to subject matter as defined in the claims.

According to an embodiment, a wearable device may comprise at least one memory configured to store instructions, an actuator, at least one sensor, an outputting circuit, and at least one processor operably coupled with the at least one memory, the actuator, the at least one sensor, and the outputting circuit. The at least one processor may be, when executing the instructions, configured to obtain, through the at least one sensor, motion data of a user wearing the wearable device. The at least one processor may be, when executing the instructions, configured to set, based on the motion data, an operation mode of the wearable device to a first operation mode. The at least one processor may be, when executing the instructions, configured to provide, after setting the operation mode to the first operation mode, based on identifying a timing for providing a notification, the notification. The at least one processor may be, when executing the instructions, configured to identify whether a designated user input is received based on the motion data obtained through the at least one sensor during a designated time interval, after providing the notification. The at least one processor may be, when executing the instructions, configured to change the operation mode from the first operation mode to a second operation mode, based on identifying that the designated user input is received.

According to an embodiment, a method of a wearable device may comprise obtaining, through at least one sensor, motion data of a user wearing the wearable device. The method may comprise setting, based on the motion data, an operation mode of the wearable device to a first operation mode. The method may comprise, after setting the operation mode to the first operation mode, providing, based on identifying a timing for providing a notification, the notification. The method may comprise, after providing the notification, identifying whether a designated user input is received based on the motion data obtained through the at least one sensor during a designated time interval. The method may comprise, based on identifying that the designated user input is received, changing the operation mode from the first operation mode to a second operation mode.

According to an embodiment, a non-transitory computer readable storage medium may store one or more programs. The one or more programs may comprise instructions, which, when being executed by at least one processor of a wearable device with an actuator, at least one sensor, and an outputting circuit, cause the wearable device to obtain, through the at least one sensor, motion data of a user wearing the wearable device. The one or more programs may comprise instructions, which cause the wearable device to set, based on the motion data, an operation mode of the wearable device to a first operation mode. The one or more programs may comprise instructions, which cause the wearable device to provide, after setting the operation mode to the first operation mode, based on identifying a timing for providing a notification, the notification. The one or more programs may comprise instructions, which cause the wearable device to identify whether a designated user input is received based on the motion data obtained through the at least one sensor during a designated time interval, after providing the notification. The one or more programs may comprise instructions, which cause the wearable device to change the operation mode from the first operation mode to a second operation mode, based on identifying that the designated user input is received.

### [Advantageous Effects]

A wearable device according to an embodiment may obtain motion data of a user. The wearable device may set an operation mode of the wearable device to a first operation mode based on the motion data of the user. The wearable device may identify that the operation mode of the wearable device is maintained in the first operation mode and provide a notification to the user. The wearable device may identify whether a user input is received regarding whether to change the operation mode of the wearable device from the first operation mode to a second operation mode. The wearable device may identify whether the user input is received based on the motion data of the user obtained during a designated time interval. The wearable device may change the operation mode of the wearable device from the first operation mode to the second operation mode based on the user input.

The effects that can be obtained from the present disclosure are not limited to those described above, and any other effects not mentioned herein will be clearly understood by those having ordinary knowledge in the art to which the present disclosure belongs, from the following description.

### [Description of the Drawings]

FIG. 1 illustrates an environment including a wearable device according to various embodiments.
FIG. 2 is a simplified block diagram of a wearable device according to various embodiments.
FIG. 3 illustrates an example of an external shape of a wearable device according to various embodiments.
FIG. 4 illustrates an example of an operation mode of a wearable device according to various embodiments.
FIG. 5 illustrates an example of an operation of a wearable device for interval training according to various embodiments.
FIG. 6 is a flowchart for illustrating an operation of a wearable device according to various embodiments.
FIG. 7A illustrates an example of an operation of a wearable device according to various embodiments.
FIG. 7B illustrates another example of an operation of a wearable device according to various embodiments.
FIG. 8A illustrates an example of an operation for providing a notification through vibration in a wearable device according to various embodiments.
FIG. 8B illustrates another example of an operation for providing a notification through vibration in a wearable device according to various embodiments.
FIG. 9 illustrates another example of an operation of a wearable device according to various embodiments.
FIG. 10 illustrates another example of an operation of a wearable device according to various embodiments.
FIG. 11 illustrates another example of an operation of a wearable device according to various embodiments.
FIG. 12 is another flowchart for illustrating an operation of a wearable device according to various embodiments.
FIG. 13 illustrates an example of an operation of a wearable device and an external electronic device connected with the wearable device, according to various embodiments.
FIG. 14A illustrates an example of an operation of a wearable device and an external electronic device connected with the wearable device, according to various embodiments.
FIG. 14B illustrates another example of an operation of a wearable device and an external electronic device connected with the wearable device, according to various embodiments.
FIG. 15 is another flowchart for illustrating an operation of a wearable device according to various embodiments.

### [Mode for Invention]

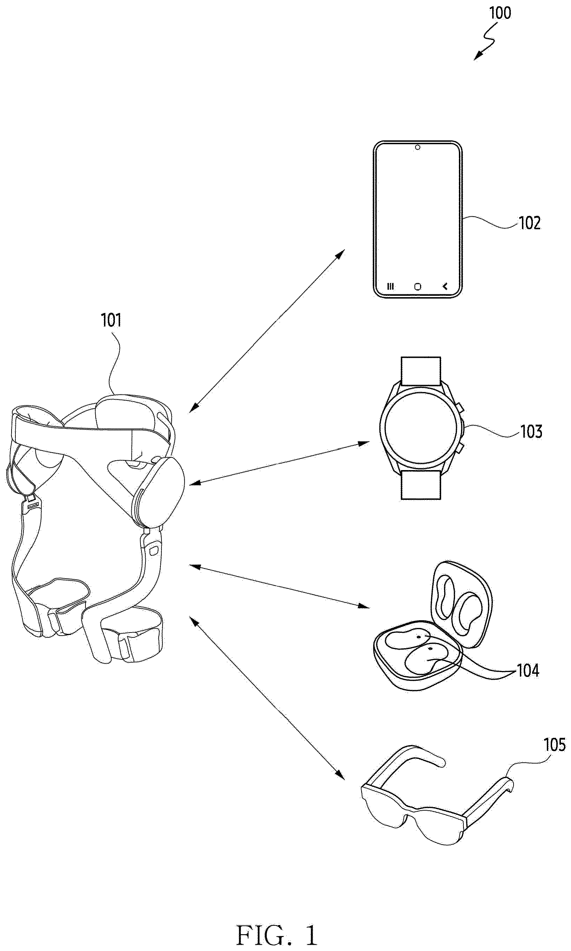

FIG. 1 illustrates an environment including a wearable device according to various embodiments.

Referring to FIG. 1, in an environment 100, a wearable device 101 may be worn by a user. For example, the wearable device 101 may operate by being worn by the user. For example, the wearable device 101 may operate by being worn on a part of a body of the user (e.g., a lower body or a pelvis). The wearable device 101 may be used to assist or resist walking of the user. For example, the wearable device 101 may include a walking assistance device. The wearable device 101 may include a gait enhancing and motivating system (GEMS) for assisting walking.

According to an embodiment, the wearable device 101 may establish a connection with a plurality of external electronic devices 102, 103, 104, and 105.

For example, the wearable device 101 may establish a connection with the external electronic device 102. The external electronic device 102 may be used to control the wearable device 101. The external electronic device 102 may transmit a request signal for controlling the wearable device 101. The wearable device 101 may receive the request signal from the external electronic device 102. The wearable device 101 may perform an operation indicated by the request signal.

According to an embodiment, the wearable device 101 may be connected with the plurality of external electronic devices 102, 103, 104, and 105 through a wireless connection based on a wireless network. The wireless network may include network such as Long Term Evolution (LTE), 5g New Radio (NR), Wireless Fidelity (WiFi), Zigbee, Near Field Communication (NFC), Bluetooth, Bluetooth Low-Energy (BLE), or a combination thereof. For example, the wearable device 101 may be connected with each of the plurality of external electronic devices 102, 103, 104, and 105 through a Bluetooth connection. For another example, the wearable device 101 may be connected with each of the plurality of external electronic devices 102, 103, 104, and 105 through a wireless local area network (WLAN) connection.

For example, the external electronic device 102 may be carried by the user. For an example, the external electronic device 102 may be a terminal that is owned by the user. The terminal may include, for example, a Personal Computer (PC) such as a laptop and desktop, a smartphone, a smartpad, and a tablet personal computer (PC). For an example, the external electronic device 102 may be used to provide information to the user through a display. For example, the external electronic device 103 may operate by being worn on a part of the body of the user (e.g., a wrist). The external electronic device 103 may be used to obtain information on the body of the user. The external electronic device 103 may have a shape of a watch. For example, the external electronic device 104 may operate by being worn on another part of the body of the user (e.g., an ear). The external electronic device 104 may have a shape that is detachable from each of two ears of the user. The external electronic device 104 may be used to output sound to the user. For example, the external electronic device 105 may operate by being worn on another part of the body of the user (e.g., a face). The external electronic device 105 may have a shape of glasses. The external electronic device 105 may be used to provide a visual object overlapping a visible environment.

According to an embodiment, the wearable device 101 may be connected with the external electronic device 103 to the external electronic device 105 through the external electronic device 102. For example, the external electronic device 102 may establish a connection with the wearable device 101, the external electronic device 103, the external electronic device 104, and the external electronic device 105. The external electronic device 102 may receive a user input for controlling at least one of the wearable device 101, the external electronic device 103, the external electronic device 104, and the external electronic device 105 from the user. The external electronic device 102 may transmit a signal for controlling at least one of the wearable device 101, the external electronic device 103, the external electronic device 104, and the external electronic device 105 based on the user input.

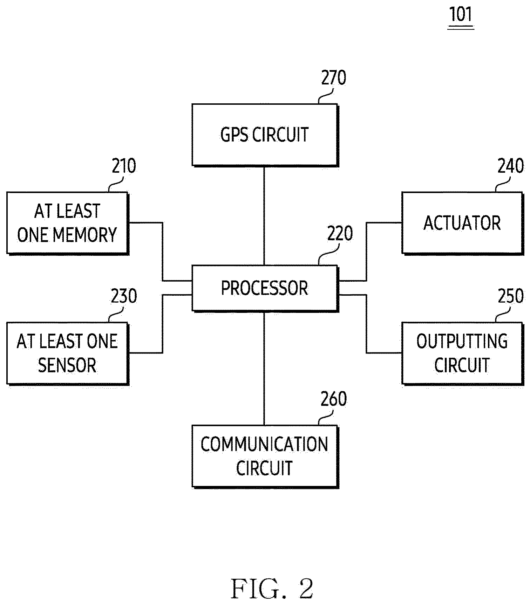

FIG. 2 is a simplified block diagram of a wearable device according to various embodiments.

Referring to FIG. 2, a wearable device 101 may include at least one memory 210, a processor 220, at least one sensor 230, an actuator 240, an outputting circuit 250, a communication circuit 260, and/or a global positioning system (GPS) circuit 270. According to an embodiment, the wearable device 101 may include at least one of the at least one memory 210, the processor 220, the at least one sensor 230, the actuator 240, the outputting circuit 250, the communication circuit 260, and the GPS circuit 270. For example, at least part of the at least one memory 210, the processor 220, the at least one sensor 230, the actuator 240, the outputting circuit 250, the communication circuit 260, and the GPS circuit 270 may be omitted according to an embodiment.

According to an embodiment, the processor 220 may control the at least one memory 210, the at least one sensor 230, the actuator 240, the outputting circuit 250, the communication circuit 260, and the GPS circuit 270. For example, the processor 220 may identify information stored in the at least one memory 210. For another example, the processor 220 may establish a connection with an external electronic device (e.g., the external electronic device 102 to the external electronic device 105 of FIG. 1) through the communication circuit 260.

The processor 220 may, for example, control at least one other component (e.g., a hardware or software component) of the wearable device 101 connected to the processor 220 by executing software (e.g., a program) and perform various data processing or calculation. According to an embodiment, as at least part of the data processing or the calculation, the processor 220 may store a command or data received from the other component in the at least one memory 210, process the command or the data stored in the at least one memory 210, and store result data in the at least one memory 210. According to an embodiment, the processor 220 may include a main processor (e.g., a central processing unit or an application processor) or a coprocessor (e.g., a graphics processing unit, a neural processing unit (NPU), an image signal processor, a sensor hub processor, or a communication processor) that can be operated independently or together with the main processor. For example, in case that the wearable device 101 includes the main processor and the coprocessor, the coprocessor may be set to use lower power than the main processor or to specialize in a designated function. The coprocessor may be implemented separately from the main processor or as a part thereof.

According to an embodiment, the at least one memory 210 may store various data used by at least one component (e.g., the processor 220 or the at least one sensor 230) of the wearable device 101. The data may include, for example, input data or output data for software (e.g., the program) and commands related thereto. The at least one memory 210 may include a volatile memory or a nonvolatile memory.

According to an embodiment, the at least one sensor 230 may detect an operating state (e.g., power or temperature) of the wearable device 101 or an external environmental state (e.g., a user state), and generate an electrical signal or data value corresponding to the detected state. According to an embodiment, the at least one sensor 230 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

For an example, the at least one sensor 230 may include a heart rate variability (HRV) sensor. The processor 220 may obtain information on a heart rate of a user by using the HRV sensor.

For another example, the at least one sensor may include the acceleration sensor, the gyro sensor, or a magnetometer. The acceleration sensor may identify (or measure or detect) acceleration of the wearable device 101 in three directions: x-axis, y-axis, and z-axis. The gyro sensor may identify (or measure or detect) angular velocity of the wearable device 101 in three directions: the x-axis, y-axis, and z-axis. The magnetometer may detect magnitude of a magnetic field. For an example, the magnetometer may identify that the wearable device 101 is worn by the user based on a change in the magnitude of the magnetic field.

For another example, the at least one sensor may include a motion sensor. The processor 220 may identify data related to a movement of a waist of the user by using the motion sensor. The processor 120 may identify the movement of the waist of the user by using the motion sensor.

According to an embodiment, the actuator 240 may be used to occur torque. The actuator 240 may be used to output the torque. The processor 220 may assist or resist walking of the user by adjusting the torque of the actuator 240.

For example, the actuator 240 may occur resist torque. The actuator 240 may resist the walking of the user through the resist torque. For another example, the actuator 240 may occur an assist torque. The actuator 240 may assist the walking of the user through the assist torque.

According to an embodiment, the outputting circuit 250 may be used to provide a notification to the user of the wearable device 101. The outputting circuit 250 may be configured in various ways.

For example, the outputting circuit 250 may include at least one vibration motor. The at least one vibration motor may be used to provide vibration to a user through various intensities. For example, the processor 220 may provide the notification to the user through vibration by using the at least one vibration motor.

For another example, the outputting circuit 250 may include a sound output circuit. The processor 220 may provide the notification to the user through sound by using the sound output circuit.

For another example, the outputting circuit may include a display. The processor 220 may provide the notification to the user through a screen by using the display.

According to an embodiment, the communication circuit 260 may be used for various radio access technologies (RATs). For example, the communication circuit 260 may be used to perform Bluetooth communication or wireless local area network (WLAN) communication. For example, the processor 220 may establish a connection with the external electronic device through the communication circuit 260. The processor 220 may transmit and receive a signal to and from the external electronic device through the communication circuit 260.

According to an embodiment, the GPS circuit 270 may be used to receive a GPS signal. GPS may include at least one of global navigation satellite system (GLONASS), Beidou Navigation Satellite System (hereinafter "beidou"), quasi-zenith satellite system (QZSS), indian reginal satellite system (IRNSS), or the european global satellite-based navigation system (Galileo), according to a usage area or bandwidth. The wearable device 101 may obtain data on a location of the wearable device 101 by using the GPS circuit 270.

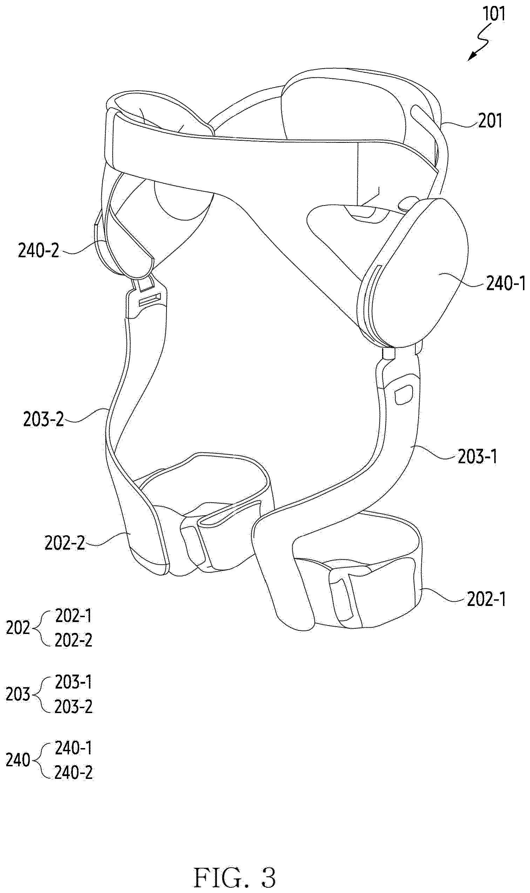

In FIG. 2, an electrically connected internal block diagram of the wearable device 101 is illustrated, but in FIG. 3, an external shape of the wearable device 101 may be illustrated.

FIG. 3 illustrates an example of an external shape of a wearable device according to various embodiments.

Referring to FIG. 3, a wearable device 101 may include a first support portion 201, a second support portion 202, a connection portion 203, and an actuator 240.

According to an embodiment, the wearable device 101 may be formed to be worn on a lower body of a user. For example, the first support portion 201 may be fixed to a waist or hips of the user.

For example, the second support portion 202 may include a second support portion 202-1 and a second support portion 202-2. The second support portion 202 may be fixed to a leg (or thigh) of the user. For example, the second support portion 202-1 may be fixed to a left leg of the user. The second support portion 202-2 may be fixed to a right leg of the user.

According to an embodiment, the actuator 240 may be attached to the first support portion 201. For example, the actuator 240 may include an actuator 240-1 and an actuator 240-2. The actuator 240-1 may be attached to a first part (e.g., left side) of the first support portion 201. The actuator 240-2 may be attached to a second part (e.g., right side) of the first support portion 201 that is opposite to the first part.

According to an embodiment, the connection portion 203 may rotatably connect the second support portion 202 with respect to the first support portion 201 through the actuator 240. For example, the connection portion 203 may include a connection portion 203-1 and a connection portion 203-2. The connection portion 203-1 may rotatably connect the second support portion 202-1 with respect to the first support portion 201 through the actuator 240-1. The connection portion 203-2 may rotatably connect the second support portion 202-2 with respect to the first support portion 201 through the actuator 240-2.

According to an embodiment, the actuator 240 may occur torque for resisting moving of the user (e.g., walking). For example, the actuator 240 may occur resist torque. The actuator 240 may occur torque to occur a force in a direction opposite to the direction in which the user lifts the leg when the user lifts the leg. The actuator 240 may occur torque to occur a force in a direction opposite to the direction in which the user lowers the leg when the user changes from a state in which the leg is raised to a state in which the leg is lowered.

According to an embodiment, the actuator 240 may occur torque for assisting the moving of the user (e.g., walking). For example, the actuator 240 may occur assist torque. The actuator 240 may occur torque to occur a force in a direction corresponding to the direction in which the user lifts the leg when the user lifts the leg. The actuator 240 may occur torque to occur a force in a direction corresponding to the direction in which the user lowers the leg when the user changes from a state in which the leg is raised to a state in which the leg is lowered.

According to an embodiment, the actuator 240-1 and the actuator 240-2 may output (or occur) torque in different ranges. For example, in case that the user of the wearable device 101 walks on a sidewalk inclined to one side, the wearable device 101 may assist the moving of the user by outputting torque in different ranges from the actuator 240-1 and the actuator 240-2.

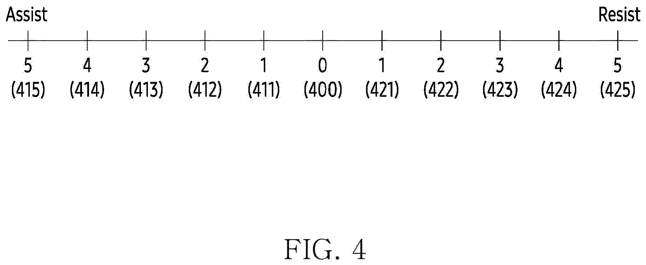

FIG. 4 illustrates an example of an operation mode of a wearable device according to various embodiments.

Referring to FIG. 4, a wearable device 101 may operate in a plurality of operation modes to assist or resist moving of a user. For example, the plurality of operation modes in which the wearable device 101 operates may include a plurality of operation modes for outputting assist torque and a plurality of operation modes for outputting resist torque. The plurality of operation modes in which the wearable device 101 operates may include an operation mode that does not output torque. In each operation mode, the wearable device 101 may output torque having values within different designated ranges.

For example, the resist torque and the assist torque may act in opposite directions. For an example, the resist torque may act in a direction for resisting a movement of the user. The assist torque may act in a direction for assisting the movement of the user.

Magnitude of the resist torque may have values that change according to a posture (e.g., posture according to walking) of the user. The magnitude of the resist torque may have the values that change according to the posture (e.g., posture according to walking) of the user. For convenience of description, the magnitude of the resist torque may be described as corresponding to magnitude of a force for resisting the movement of the user. Magnitude of the assist torque may be described as corresponding to magnitude of a force for assisting the movement of the user.

For example, the plurality of operation modes for outputting the assist torque may include an assist 1 mode 411 to an assist 5 mode 415. In the assist 5 mode 415, the magnitude of the assist torque may be set to be the greatest. In the assist 1 mode 411, the magnitude of the assist torque may be set to be the smallest. As a mode changes from the assist 5 mode 415 to the assist 1 mode 411, a processor 220 of the wearable device 101 may reduce the magnitude of the assist torque. For example, as the mode changes from the assist 5 mode 415 to the assist 1 mode 411, the processor 220 may reduce the magnitude of the assist torque by changing a designated range. For an example, in the assist 1 mode 411, the processor 220 may output torque having values within a first designated range. In an assist 2 mode 412, the processor 220 may output torque having values within a second designated range. A first force for assisting the movement of the user acting through the torque having values within the second designated range may be set to be greater than a second force for assisting the movement of the user acting through the torque having values within the first designated range.

For example, in a zero mode 400, the processor 220 may not output torque. The zero mode 400 may be referred to as an assist 0 mode or a resist 0 mode.

For example, the plurality of operation modes for outputting the resist torque may include a resist 1 mode 421 to a resist 5 mode 425. In the resist 5 mode 425, the magnitude of the resist torque may be set to be the greatest. In the resist 1 mode 421, the magnitude of the resist torque may be set to be the smallest.

As a mode changes from the resist 1 mode 421 to the resist 5 mode 425, the processor 220 may increase the magnitude of the resist torque. For example, as the mode changes from the resist 1 mode 421 to the resist 5 mode 425, the processor 220 may increase the magnitude of the resist torque by changing the designated range. For example, as the mode changes from the resist 1 mode 421 to the resist 5 mode 425, the processor 220 may increase the magnitude of the resist torque by changing the designated range. For an example, in the resist 1 mode 421, the processor 220 may output torque having values within the first designated range. In a resist 2 mode 422, the processor 220 may output torque having values within the second designated range. A first force for resisting the movement of the user, acting through the torque having values within the second designated range, may be set to be greater than a second force for resisting the movement of the user, acting through the torque having values within the first designated range.

FIG. 4 illustrates an example of the plurality of operation modes of the wearable device 101, but this is exemplary and is not limited thereto. Contrary to the above-described example, the operation mode of the wearable device 101 may be set in various ways and referred to by various names.

For example, nine modes may be further included between the two adjacent operation modes described above. For an example, nine modes may be further included between a resist 4 mode 414 and a resist 3 mode 413. A resist 4.1 mode to a resist 4.9 mode may be included between the resist 4 mode 414 and the resist 3 mode 413.

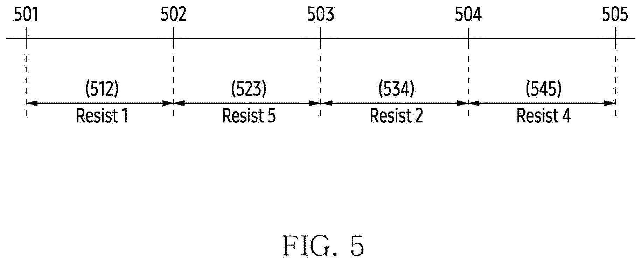

FIG. 5 illustrates an example of an operation of a wearable device for interval training according to various embodiments.

Referring to FIG. 5, a processor 220 of a wearable device 101 may operate according to an exercise program for interval training. For example, the wearable device 101 may operate to change magnitude of resist torque (or assist torque) for each section (e.g., time interval or distance). The processor 220 may change exercise intensity according to a designated interval.

The processor 220 changes torque within a first designated range (or a second designated range) in a period of a designated time or a designated distance. For example, the processor 220 may alternately output the torque within the first designated range and torque within the second designated range in a period of the designated distance. For another example, the processor 220 may alternately output the torque within the first designated range and the torque within the second designated range in a period of the designated time.

The processor 220 changes the magnitude of the resist torque based on the time interval. For example, in an interval 512 from a timing 501 to a timing 502, the wearable device 101 may operate in a resist 1 mode. In an interval 523 from the timing 502 to a timing 503, the wearable device 101 may operate in a resist 5 mode. In an interval 534 from the timing 503 to a timing 504, the wearable device 101 may operate in a resist 2 mode. In an interval 545 from the timing 504 to a timing 505, the wearable device 101 may operate in a resist 4 mode.

FIG. 5 illustrates an example of an operation of the wearable device 101 for interval training, but is not limited thereto. For example, the wearable device 101 may change the operation mode of the wearable device 101 based on a distance. For an example, in an interval from a first location to a second location, the wearable device 101 may operate in the resist 1 mode. In an interval from the second location to a third location, the wearable device 101 may operate in the resist 5 mode.

According to an embodiment, the wearable device 101 may receive a user input for total exercise time from a user. In case that the user input for the total exercise time is received, the wearable device 101 may change the operation mode of the wearable device 101 based on the time interval.

According to an embodiment, the wearable device 101 may receive a user input for a total exercise distance from the user. In case that the user input for the total exercise distance is received, the wearable device 101 may change the operation mode of the wearable device 101 based on the distance.

According to an embodiment, the wearable device 101 may repeatedly (or periodically) change the operation mode of the wearable device 101. In case that the operation mode of the wearable device 101 is repeatedly (or periodically) changed, injury to the user may occur. According to an embodiment, the wearable device 101 may identify a motion of the user and change the operation mode (or torque outputted from the wearable device 101) of the wearable device 101 based on this. An example of the operation of the wearable device 101 according to the above embodiment may be described below.

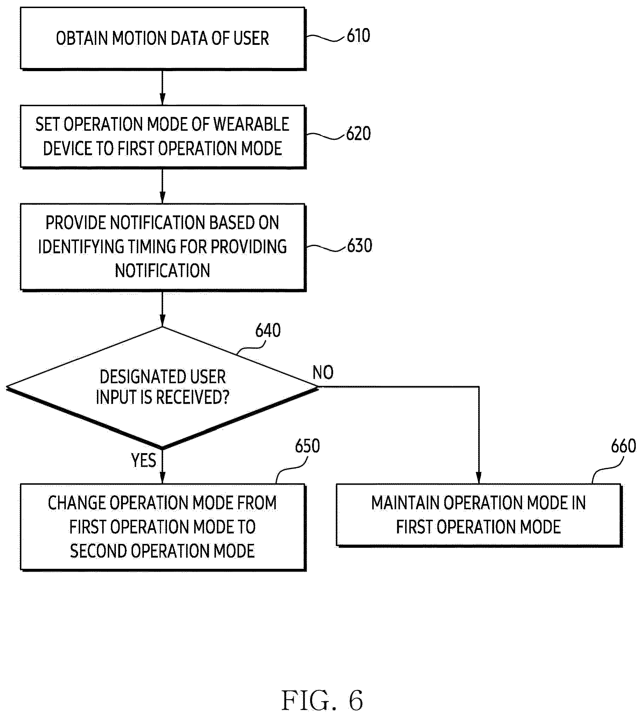

FIG. 6 is a flowchart for illustrating an operation of a wearable device according to various embodiments. Such a method may be executed by a wearable device 101 and a processor 220 of the wearable device 101 illustrated in FIGS. 2 and 3.

Referring to FIG. 6, in operation 610, the processor 220 may obtain motion data of a user. For example, the processor 220 may obtain the motion data of the user wearing the wearable device 101 through at least one sensor 230.

According to an embodiment, the motion data of the user may include motion data measurable while the user is wearing the wearable device 101. For example, the processor 220 may obtain data on a movement of a pelvis of the user, data on speed at which a leg of the user moves, and data on an angle at which a hip joint of the user moves.

According to an embodiment, the motion data of the user may be obtained through an external electronic device connected with the wearable device 101. For example, an external electronic device wearable on an arm of the user may obtain data on the movement of the arm of the user. The wearable device 101 may obtain data on the movement of the arm of the user from the external electronic device. For another example, an external electronic device capable of measuring a heart rate of the user may obtain data on the heart rate of the user. The wearable device 101 may obtain data on the heart rate of the user from the external electronic device.

In operation 620, the processor 220 may set an operation mode of the wearable device 101 to a first operation mode. For example, the processor 220 may set the operation mode of the wearable device 101 to the first operation mode based on the motion data of the user. For example, the processor 220 may output torque having values within a first designated range through an actuator 240 based on the motion data of the user.

For example, the processor 220 may identify that the user has started to move based on the motion data of the user. The processor 220 may set the operation mode of the wearable device 101 to the first operation mode based on identifying that the user has started to move.

For another example, the processor 220 may identify information on stride length of the user based on the motion data of the user. The processor 220 may set the operation mode of the wearable device 101 to the first operation mode based on information on the stride length of the user.

For another example, the processor 220 may identify information on a moving velocity of the user based on the motion data of the user. The processor 220 may set the operation mode of the wearable device 101 to the first operation mode based on the information on the moving velocity of the user.

For another example, the processor 220 may identify torque caused by the user based on the motion data of the user. The processor 220 may set the operation mode of the wearable device 101 to the first operation mode based on the torque caused by the user. For example, torque may occur according to walking of the user. The processor 220 may identify the torque that occurs according to the walking of the user. The processor 220 may set the operation mode of the wearable device 101 to the first operation mode based on the torque that occurs according to the walking of the user.

For another example, the processor 220 may obtain information on an operation record of the user from a server (or at least one memory 210). The processor 220 may set the operation mode of the wearable device 101 to the first operation mode based on the information on the operation record of the user and the motion data of the user.

In operation 630, the processor 220, after setting the operation mode of the wearable device 101 to the first operation mode, provides a notification, based on identifying a timing to provide the notification.

According to an embodiment, the processor 220 may identify that reference time has elapsed from a timing at which the operation mode of the wearable device 101 is set to the first operation mode. The processor 220 may identify a timing at which the reference time has elapsed from the timing at which the operation mode of the wearable device 101 is set to the first operation mode. The processor 220 may identify the timing at which the reference time has elapsed from the timing at which the operation mode of the wearable device 101 is set to the first operation mode as a timing for providing the notification. For example, the processor 220 may identify that the operation mode of the wearable device 101 set to the first operation mode has been maintained for the reference time.

The processor 220 identifies a timing to change the operation mode of the wearable device 101 after setting the operation mode of the wearable device 101 to the first operation mode. The processor 220 identifies the timing for providing the notification based on the identified timing.

Within first time interval, the processor 220 may set the wearable device 101 to operate in the first operation mode. Within second time interval after the first time interval, the processor 220 may set the wearable device 101 to operate in a second operation mode.

The processor 220 may identify from the timing at which the operation mode of the wearable device 101 is set to the first operation mode from a timing at which the second time interval starts to before a designated time as the reference time. The processor 220 may identify from a timing at which the second time interval starts to before a designated time as the timing for providing the notification. For example, the designated time may be set as a fixed time. For another example, the designated time may be set based on the motion data of the user.

Meanwhile, the processor 220 may provide the notification in various ways. The processor 220 provides the notification through vibration by using two vibration motors. The processor 220 provides vibration at a first intensity while a posture of a part of a body of the user is a first posture. The processor 220 provides vibration at a second intensity while the posture of the part of the body of the user is a second posture. For an example, the first posture may include a posture in which an angle of a hip joint of the user which changes according to walking of the user is a first angle. The second posture may include a posture in which the angle of the hip joint of the user which changes according to the walking of the user is a second angle.

According to an embodiment, the processor 220 may transmit a signal for requesting to provide the notification through the external electronic device connected with the wearable device 101 to the external electronic device. The external electronic device may provide the notification to the user based on the signal.

In operation 640, the processor 220 may identify whether a designated user input is received. For example, after providing the notification, the processor 220 may identify whether the designated user input is received based on data obtained through the at least one sensor 230 during a designated time interval.

According to an embodiment, after providing the notification, the processor 220 may identify the motion data of the user obtained through the at least one sensor 230 during the designated time interval. For example, after providing the notification, the processor 220 may obtain information on the moving velocity of the user during the designated time interval. For another example, after providing the notification, the processor 220 may obtain information on the stride length of the user during the designated time interval.

According to an embodiment, after providing the notification, the processor 220 may identify whether the motion data of the user obtained through the at least one sensor 230 during the designated time interval corresponds to reference data. After providing the notification, the processor 220 may identify whether the designated user input is received based on whether the motion data of the user obtained through the at least one sensor 230 during the designated time interval corresponds to the reference data. For example, the processor 220 may identify that the designated user input is received based on the motion data of the user corresponding to the reference data. For another example, the processor 220 may identify that the designated user input is not received, based on the motion data of the user not corresponding to the reference data.

For example, after providing the notification, the processor 220 may obtain information on the stride length of the user through the at least one sensor 230 during the designated time interval. After providing the notification, the processor 220 may identify whether an average of the stride length of the user during the designated time interval is greater than or equal to a designated stride length. The processor 220 may identify that the designated user input is received based on the average of the stride length of the user during the designated time interval being greater than or equal to the designated stride length. The processor 220 may identify that the designated user input is not received based on the average of the stride length of the user during the designated time interval being less than the designated stride length.

For another example, after providing the notification, the processor 220 may obtain information on the moving velocity of the user through the at least one sensor 230 during the designated time interval. The processor 220 may identify whether the moving velocity of the user during the designated time interval is greater than or equal to a designated moving velocity. The processor 220 may identify that the designated user input is received based on the moving velocity of the user during the designated time interval being greater than or equal to the designated moving velocity. The processor 220 may identify that the designated user input is not received based on the moving velocity of the user during the designated time interval is less than the designated moving velocity.

According to an embodiment, the processor 220 may provide the notification during the designated time interval. The processor 220 may identify whether the designated user input is received based on the motion data of the user obtained while the notification is provided.

In operation 650, in case that the designated user input is received, the processor 220 may change the operation mode of the wearable device 101 from the first operation mode to the second operation mode. The processor 220 may change the operation mode of the wearable device 101 from the first operation mode to the second operation mode based on identifying that the designated user input is received. For example, the second operation mode may be distinct from the first operation mode. For an example, the processor 220 may change the operation mode of the wearable device 101 from a resist 3 mode to a resist 4 mode based on identifying that the designated user input is received.

According to an embodiment, after changing the operation mode of the wearable device 101 from the first operation mode to the second operation mode, the processor 220 may provide another notification for guiding a motion of the user. For example, after changing the operation mode of the wearable device 101 from the first operation mode to the second operation mode, the processor 220 may provide another notification for guiding the moving velocity of the user.

In operation 660, in case that the designated user input is not received, the processor 220 may maintain the operation mode of the wearable device 101 in the first operation mode. The processor 220 may maintain the operation mode of the wearable device 101 in the first operation mode based on identifying that the designated user input is not received. For an example, the processor 220 may maintain the operation mode of the wearable device 101 set to the resist 3 mode based on identifying that the designated user input is not received.

According to an embodiment, in response to providing the notification, the processor 220 may identify another user input that is distinct from the designated user input from the external electronic device connected with the wearable device. The processor 220 may maintain the operation mode of the wearable device 101 in the first operation mode based on the other user input.

According to an embodiment, the processor 220 may identify a specific operation of the user. The processor 220 may change the operation mode of the wearable device 101 from the first operation mode to a third operation mode based on identifying the specific operation of the user. For example, the specific operation of the user may include a waist turning operation or a lunge operation.

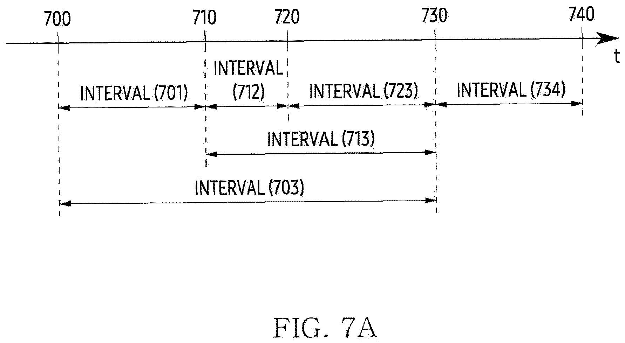

FIG. 7A illustrates an example of an operation of a wearable device according to various embodiments.

Referring to FIG. 7A, at a timing 700, a processor 220 may operate in a first operation mode. For example, in the first operation mode, the processor 220 may output torque having values within a first designated range. The processor 220 may identify that a reference time has elapsed from a timing of initiating outputting the torque having values within the first designated range. For example, the reference time may be set as an interval 701. In the interval 701, the processor 220 may identify that an operation mode of a wearable device 101 is maintained in the first operation mode. In the interval 701, the processor 220 may identify that output of the torque having values within the first designated range is maintained.

At a timing 710, the processor 220 may provide a notification based on identifying that the reference time (e.g., the interval 701) has elapsed from a timing at which the operation mode of the wearable device 101 is set to the first operation mode.

After providing the notification, the processor 220 may obtain motion data of a user during a designated time interval. For example, the designated time interval may be set as an interval 723. In the interval 723, the processor 220 may identify whether a designated user input is received based on the motion data of the user obtained through at least one sensor 230. For example, the processor 220 may wait for an operation which identifies whether the designated user input is received during an interval 712 from the timing 710 of providing the notification.

After the interval 712 has elapsed, in the interval 723, the processor 220 may identify whether the designated user input is received based on the motion data of the user obtained through the at least one sensor 230. For example, at a timing 720, the processor 220 may start an operation which identifies whether the designated user input is received based on the motion data of the user obtained through the at least one sensor 230. For example, the interval 712 may be set to a fixed time. For another example, the interval 712 may be set based on the motion data of the user.

According to an embodiment, the processor 220 may identify information on stride length of the user based on the motion data of the user. The processor 220 may identify the reference time (e.g., the interval 701) based on the information on the stride length of the user.

For an example, the processor 220 may identify that the user takes 0.83 seconds per step, based on the motion data of the user. The processor 220 may provide the notification prior to a time required for 10 steps from the timing 720. The processor may provide the notification 8.3 seconds prior to the timing 720. The interval 712 may be set to 8.3 seconds. The processor 220 may identify the reference time (e.g., the interval 701) by setting the interval 712.

According to an embodiment, the processor 220 may obtain the motion data of the user during the designated time interval immediately after providing the notification. For example, the designated time interval may be set as an interval 713.

Meanwhile, based on identifying that the designated user input is received, at a timing 730, the processor 220 may change the operation mode from a first operation mode to a second operation mode. The processor 220 may change torque within the first designated range to torque within a second designated range.

Therefore, the processor 220 may operate in the first operation mode in an interval 703. The processor 220 may output the torque having values within the first designated range in the interval 703. The processor 220 may operate in the second operation mode in an interval 734 from the timing 730 to a timing 740. The processor 220 may output torque having values within the second designated range in the interval 734.

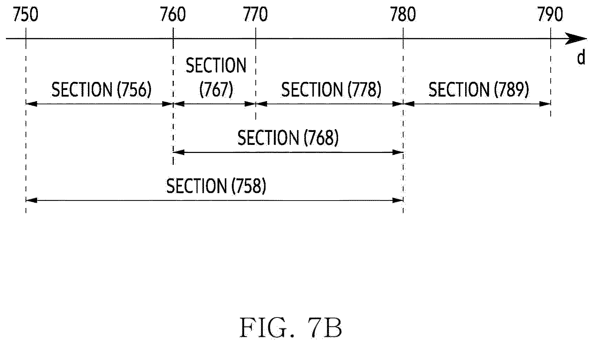

FIG. 7A illustrates an embodiment for changing the operation mode of the wearable device 101 from the first operation mode to the second operation mode based on time, but the processor 220 may change the operation mode of the wearable device 101 from the first operation mode to the second operation mode based on the distance. A specific embodiment thereof may be described through FIG. 7B.

FIG. 7B illustrates another example of an operation of a wearable device according to various embodiments.

Referring to FIG. 7B, at a point 750, a processor 220 may operate in a first operation mode. The processor 220 may output torque having values within a first designated range at the point 750. The processor 220 may identify that an operation mode of a wearable device 101 is maintained in the first operation mode in a section 756. The processor 220 may identify that output of the torque having values within the first designated range is maintained in the section 756. At a point 760, the processor 220 may provide a notification.

After providing the notification, the processor 220 may obtain motion data of a user during a designated section. For example, the designated section may be set as a section 778. The processor 220 may identify whether a designated user input is received based on the motion data of the user obtained through at least one sensor 230 in the section 778. For example, the processor 220 may wait for an operation which identifies whether the designated user input is received while the wearable device 101 moves from the point 760 that provided the notification to a point 770. The processor 220 may wait for an operation which identifies whether the designated user input is received during a section 767. The processor 220 may identify whether the designated user input is received based on the motion data of the user obtained through the at least one sensor 230 based on the wearable device 101 being located at the point 770. The processor 220 may identify whether the designated user input is received based on the motion data of the user obtained through the at least one sensor 230 during the section 778 from the point 770 to a point 780.

For example, the section 767 may be set to a fixed distance. For another example, the section 767 may be set based on the point 750 and the point 770. For an example, the section 767 may be set based on a designated ratio of a section between the point 750 and the point 770. In case that the designated ratio is set to 10 %, and the section between the point 750 and the point 770 is set to 2 km, the section 767 may be set to 200 m.

Meanwhile, the processor 220 may change the operation mode from the first operation mode to a second operation mode at the point 780, based on identifying that the designated user input is received. The processor 220 may change the torque having values within the first designated range to torque having values within a second designated range.

Therefore, the processor 220 may operate in the first operation mode in a section 758. The processor 220 may output the torque having values within the first designated range in the section 758. The processor 220 may operate in the second operation mode in a section 789 between the point 780 and a point 790. The processor 220 may output the torque having values within the second designated range in the section 789.

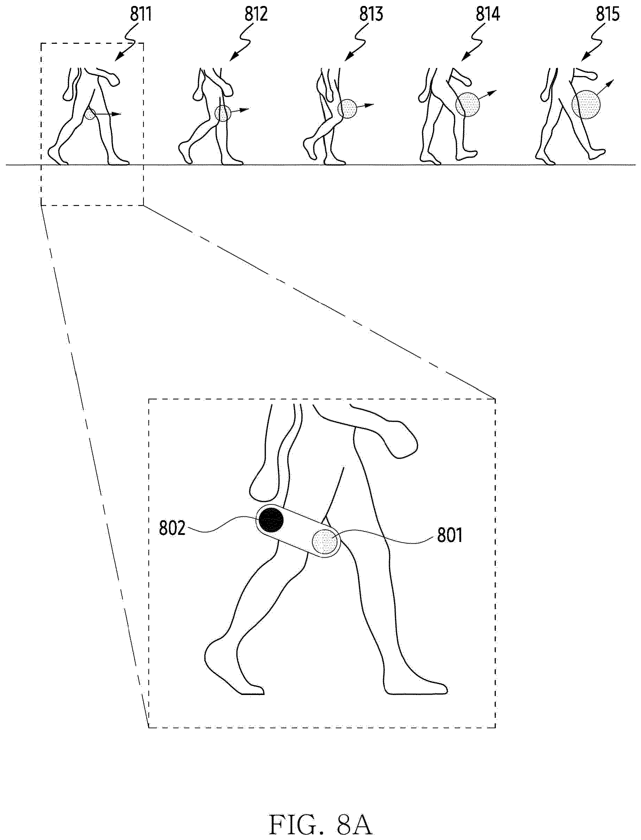

FIG. 8A illustrates an example of an operation for providing a notification through vibration in a wearable device according to various embodiments.

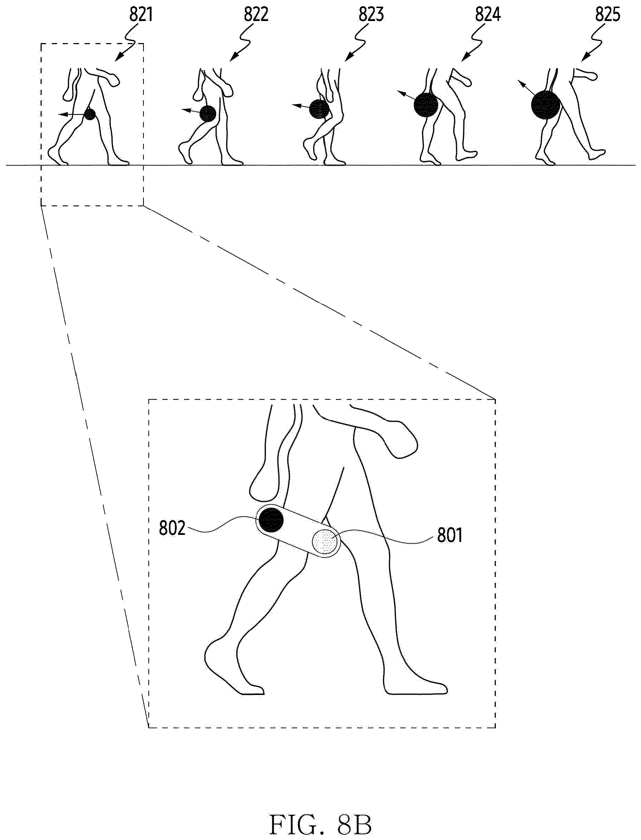

FIG. 8B illustrates another example of an operation for providing a notification through vibration in a wearable device according to various embodiments.

Referring to FIGS. 8A and 8B, an outputting circuit 250 of a wearable device 101 may include at least one vibration motor. The wearable device 101 may provide a notification to a user through vibration by using the at least one vibration motor. The at least one vibration motor includes The first vibration motor 801 and a second vibration motor 802. The first vibration motor 801 is included in the wearable device 101 to be located in front of a part of a body of the user (thigh). The second vibration motor 802 is included in the wearable device 101 to be located on a rear side of the part of the body of the user (thigh).

The processor 220 provides vibration at a first intensity while a posture of the part of the body of the user is a first posture. The processor 220 provides vibration at a second intensity while the posture of the part of the body of the user is a second posture. For an example, the first posture may include a posture in which an angle of a hip joint of the user which changes according to walking of the user is a first angle. The second posture may include a posture in which the angle of the hip joint of the user which changes according to the walking of the user is a second angle.

Referring to FIG. 8A, the user may change the posture sequentially from a posture 811 to a posture 815 when walking. While the user is changing the posture from the posture 811 to the posture 815, the wearable device 101 may provide the notification through the first vibration motor 801. For example, the processor 220 may change an operation mode of the wearable device 101 from a first operation mode to a second operation mode. For example, the wearable device 101 may change the operation mode from the first operation mode for outputting first resist torque to the second operation mode for outputting second resist torque. The second resist torque may be set to be greater than the first resist torque. The processor 220 may provide the notification to the user through vibration for representing that magnitude of the resist torque outputted from the wearable device 101 is scheduled to increase.

For example, the processor 220 may provide vibration at the lowest intensity in the posture 811 through the first vibration motor 801. The processor 220 may provide vibration at the greatest intensity in the posture 815 through the first vibration motor 801. The processor 220 may output the intensity of the vibration strongly as the posture of the part of the body of the user is changed from the posture 811 to the posture 815. For example, the processor 220 may output the intensity of vibration outputted through the first vibration motor 801 strongly as the angle of the hip joint of the user increases. The processor 220 may output vibration through the first vibration motor 801 strongly as the part of the body of the user (e.g., thigh) moves forward.

For example, the processor 220 may provide vibration through the first vibration motor 801 located in front of the part of the body of the user and may not provide vibration through the second vibration motor 802 located on the rear of the part of the body of the user.

Referring to FIG. 8B, the user may change the posture sequentially from a posture 821 to a posture 825 when walking. While the user is changing the posture from the posture 821 to the posture 825, the wearable device 101 may provide the notification through the second vibration motor 802. For example, the processor 220 may change the operation mode of the wearable device 101 from the first operation mode to the second operation mode. For example, the wearable device 101 may change the operation mode from the first operation mode for outputting first resist torque to the second operation mode for outputting second resist torque. The second resist torque may be set to be lower than the first resist torque. The processor 220 may provide the notification to the user through vibration for representing that magnitude of the resist torque is scheduled to decrease.

For example, the processor 220 may provide vibration at the lowest intensity in the posture 821 through the second vibration motor 802. The processor 220 may provide vibration at the greatest intensity in the posture 825 through the second vibration motor 802. The processor 220 may output the intensity of the vibration strongly as the posture of the part of the body of the user is changed from the posture 821 to the posture 825. For example, the processor 220 may output the intensity of vibration outputted through the second vibration motor 802 strongly as the angle of the hip joint of the user increases. The processor 220 may output vibration through the second vibration motor 802 strongly as the part of the body of the user (e.g., thigh) moves forward.

For example, the processor 220 may provide vibration through the second vibration motor 802 located on the rear of the part of the body of the user and may not provide vibration through the first vibration motor 801 located in front of the part of the body of the user.

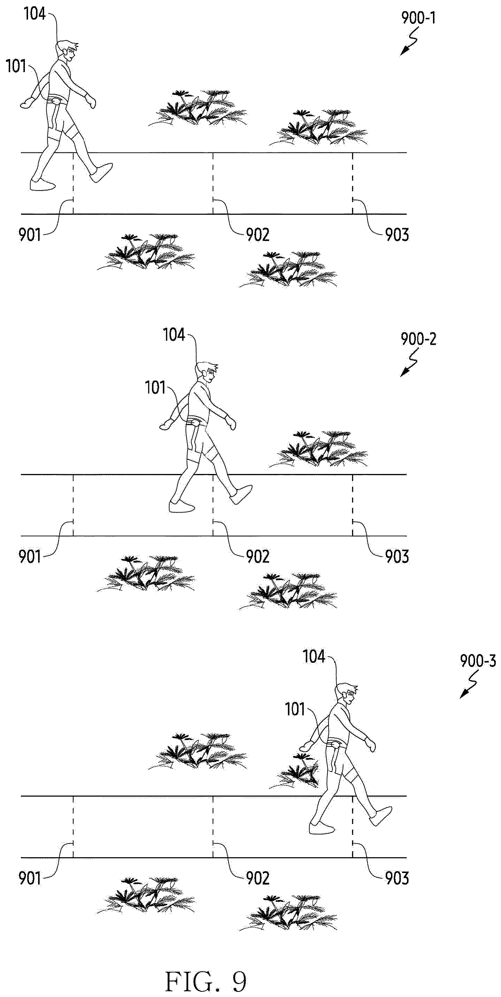

FIG. 9 illustrates another example of an operation of a wearable device according to various embodiments.

Referring to FIG. 9, a processor 220 may establish a connection with an external electronic device 104. The external electronic device 104 may operate being worn on a part of a body of a user (e.g., an ear). The external electronic device 104 may have a shape that is detachable from each of two ears of the user. The external electronic device 104 may be used to output sound to the user.

A wearable device 101 may be moved being worn by the user during a timing 900-1 to a timing 900-2. The processor 220 of the wearable device 101 may identify information on walking of the user based on a change in a hip joint angle of the user. For example, the processor 220 may identify information on stride length or information on a posture by identifying an angle of a left hip joint and an angle of a right hip joint of the user.

At the timing 900-1, the processor 220 of the wearable device 101 may be located at a point 901. The timing 900-1 may be a timing when a reference time has elapsed from a timing when an operation mode of the wearable device 101 is set to a first operation mode. At the timing 900-1, the processor 220 may transmit, to the external electronic device 104, a signal for requesting to provide a notification through the external electronic device 104 connected to the wearable device 101. For example, the processor 220 may transmit, to the external electronic device 104, a signal for requesting to provide, through the external electronic device 104, a notification representing to perform a process for changing the operation mode of the wearable device 101 from the timing 900-2. For an example, the process for changing the operation mode may include a process for identifying whether a designated user input is received based on motion data of the user obtained through at least one sensor 230 during a designated time interval.

The processor 220 may transmit, to the external electronic device 104, a signal for requesting to provide, through the external electronic device 104, a notification representing to perform a process for changing the operation mode from a point 902 (or the timing 900-2).

In response to receiving the signal, the external electronic device 104 may provide the notification representing that the process for changing the operation mode will be performed to the user through sound. For example, the external electronic device 104 may provide, to the user, through sound, a notification representing that a process for changing the operation mode will be performed 10 m ahead. For another example, the external electronic device 104 may provide, to the user, through sound, a notification representing that a process for changing the operation mode will be performed after 10 seconds.

According to an embodiment, the processor 220 may provide music or a step sound according to the stride length of the user during the timing 900-1 to the timing 900-2. According to an embodiment, during the timing 900-1 to the timing 900-2, the processor 220 may provide the notification through a voice, such as "There are 10 steps left until the section to change the exercise intensity."

At the timing 900-2 to a timing 900-3, the processor 220 may identify whether the designated user input is received based on the motion data of the user obtained through the at least one sensor 230. While the wearable device 101 moves from the point 902 to a point 903, the processor 220 may identify whether the designated user input is received based on the motion data of the user obtained through the at least one sensor 230.

At the timing 900-2 or the point 902, the processor 220 may provide a notification for receiving the user input through the external electronic device 104. For example, at the timing 900-2, the processor 220 may provide the notification through a voice, such as "In a case of walking fast for 10 seconds, the exercise intensity increases." At the timing 900-2 to the timing 900-3, the processor 220 may provide a sound for representing whether the operation mode is changed to the user through the external electronic device 104.

At the timing 900-3 or the point 903, the processor 220 may provide a notification for representing whether the user input is received through the external electronic device 104.

For example, the processor 220 may provide a notification through a voice, such as "A request to change the exercise intensity is detected. The exercise intensity will change in a moment." After providing the notification, the processor 220 may change the operation mode of the wearable device 101 from a first operation mode to a second operation mode.

For another example, the processor 220 may provide a notification through a voice, such as "A request to stop changing the exercise intensity is detected. The current exercise intensity will be maintained." After providing the notification, the processor 220 may maintain the operation mode of the wearable device 101 in the first operation mode.

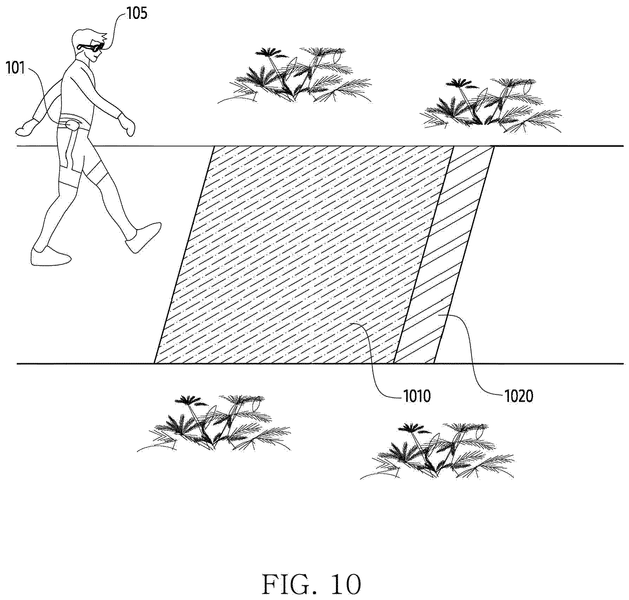

FIG. 10 illustrates another example of an operation of a wearable device according to various embodiments.

Referring to FIG. 10, a processor 220 may establish a connection with an external electronic device 105. The external electronic device 105 may operate being worn on a part of a body of a user (e.g., face). The external electronic device 105 may have a shape of glasses. The external electronic device 105 may be used to provide a visual object overlaid on a visible environment.

The processor 220 of a wearable device 101 may transmit a visual object 1010 and information for representing a visual object 1020 to the external electronic device 105. For example, the processor 220 may transmit information on a location where an operation mode of the wearable device 101 is to be changed and information on a section for performing a process for changing the operation mode to the external electronic device 105. For an example, the process for changing the operation mode may include a process for identifying whether a designated user input is received based on motion data of the user obtained through at least one sensor 230 for a designated distance.

For example, the processor 220 may identify a location where the operation mode of the wearable device 101 will be changed from a first operation mode to a second operation mode based on information on stride length of the user and a reference time. The processor 220 may transmit a signal for providing the identified location to user, to the external electronic device 105.

For example, the external electronic device 105 may provide the visual object 1010 together with the visible environment based on information on the section for performing the process for changing the operation mode. The external electronic device 105 may provide the visual object 1010 overlapped t in the visible environment based on information on the section for performing the process for changing the operation mode. The user may confirm that a section corresponding to the visual object 1010 is the section for performing the process for changing the operation mode.

For example, the external electronic device 105 may provide the visual object 1020 together with the visible environment based on information on the location where the operation mode outputted from the wearable device 101 will be changed. The external electronic device 105 may overlap and provide the visual object 1020 to the visible environment based on information on a location where the operation mode of the wearable device 101 is to be changed. The user may confirm that the operation mode is scheduled to be changed at a location corresponding to the visual object 1020. The processor 220 may identify whether the designated user input is received based on the motion data of the user obtained in a section in which the visual object 1010 is displayed. The processor 220 may change the operation mode of the wearable device 101 from the first operation mode to the second operation mode at a location where the visual object 1020 is displayed.

According to an embodiment, although not illustrated, the external electronic device 105 may further display a visual object for requesting a user input on whether to change the operation mode. The external electronic device 105 may receive the user input on whether to change the operation mode through a hand signal.

For example, the external electronic device 105 may identify an okey gesture of the user. The external electronic device 105 may transmit a signal for changing the operation mode of the wearable device 101 from the first operation mode to the second operation mode to the wearable device 101 based on the okey gesture of the user.

For another example, the external electronic device 105 may identify an X gesture of the user. The external electronic device 105 may transmit a signal for maintaining the operation mode of the wearable device 101 in the first operation mode to the wearable device 101 based on the X gesture of the user.

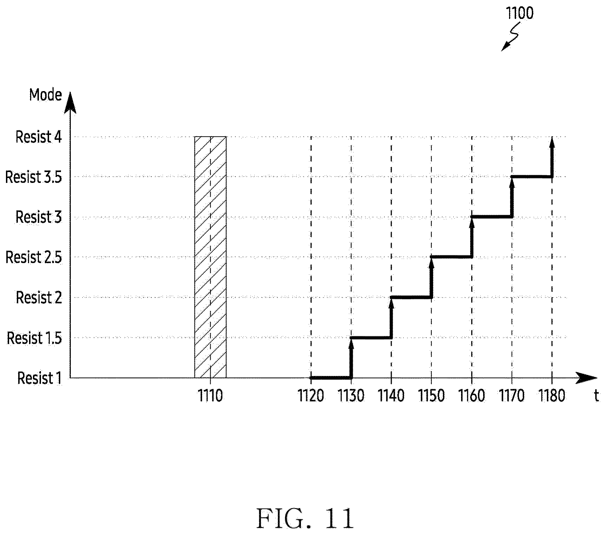

FIG. 11 illustrates another example of an operation of a wearable device according to various embodiments.

Referring to FIG. 11, horizontal axis of a graph 1100 represents time. Vertical axis of the graph 1100 represents an operation mode of a wearable device 101. The graph 1100 represents a change in the operation mode of the wearable device 101 over time.

The processor 220 may provide a notification at a timing 1110. The processor 220 may identify whether a designated user input is received based on motion data of a user obtained through at least one sensor 230 during a timing 1120 to a timing 1130. The processor 220 may change the operation mode of the wearable device 101 from a first operation mode to a second operation mode at the timing 1130, based on identifying that the designated user input is received. For example, the processor 220 may change the operation mode of the wearable device 101 from a resist 1 mode to a resist 1.5 mode.

According to an embodiment, the processor 220 may change the second operation mode to a third operation mode based on the motion data of the user obtained after changing the operation mode of the wearable device 101 from the first operation mode to the second operation mode.

For example, the processor 220 may identify the motion data of the user obtained within the timing 1130 to a timing 1140. The processor 220 may identify whether the designated user input is received based on the motion data of the user obtained within the timing 1130 to the timing 1140. The processor 220 may change the operation mode of the wearable device 101 from the second operation mode to the third operation mode at timing 1140, based on identifying that the designated user input is received. For example, the processor 220 may change the operation mode of the wearable device 101 from the resist 1.5 mode to a resist 2 mode.

According to an embodiment, the processor 220 may identify whether the designated user input is received until the wearable device 101 operates in a seventh operation mode (e.g., resist 4 mode). The processor 220 may identify that the designated user input is received from the timing 1120 to a timing 1180. Within the timing 1120 to the timing 1180, the processor 220 may sequentially change the operation mode of the wearable device 101 from the first operation mode to the seventh operation mode. For example, the processor 220 may sequentially change the operation mode at each designated interval (e.g., an interval between the timing 1130 and the timing 1140).

Contrary to what is illustrated in FIG. 11, the processor 220 may identify that the designated user input is not received. For example, based on identifying that the designated user input is not received, the processor 220 may stop an operation of sequentially changing the operation mode. The processor 220 may maintain a set operation mode until the designated user input is received.

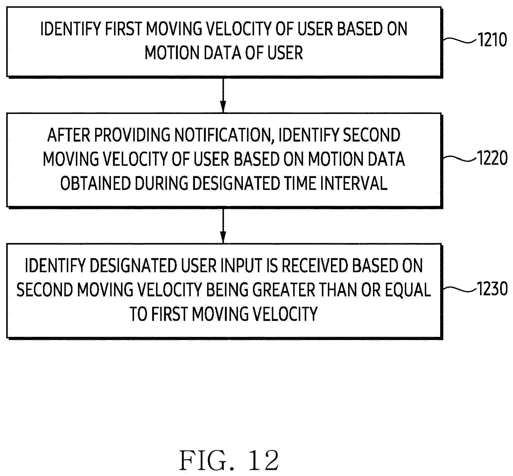

FIG. 12 is another flowchart for illustrating an operation of a wearable device according to various embodiments. Such a method may be executed by a wearable device 101 and a processor 220 of the wearable device 101 illustrated in FIGS. 2 and 3.

Referring to FIG. 12, in operation 1210, the processor 220 may identify a first moving velocity of a user based on motion data of the user. The processor 220 may identify the first moving velocity of the user based on data on stride length of the user included in the motion data of the user. For example, before providing a notification to the user, the processor 220 may identify the first moving velocity of the user based on the motion data of the user.

In operation 1220, after providing the notification, the processor 220 may identify a second moving velocity of the user based on data obtained during a designated time interval. For example, the processor 220 may compare the first moving velocity before providing the notification with the second moving velocity after providing the notification.

In operation 1230, the processor 220 may identify that a designated user input is received based on the second moving velocity being greater than or equal to the first moving velocity identified before providing the notification.

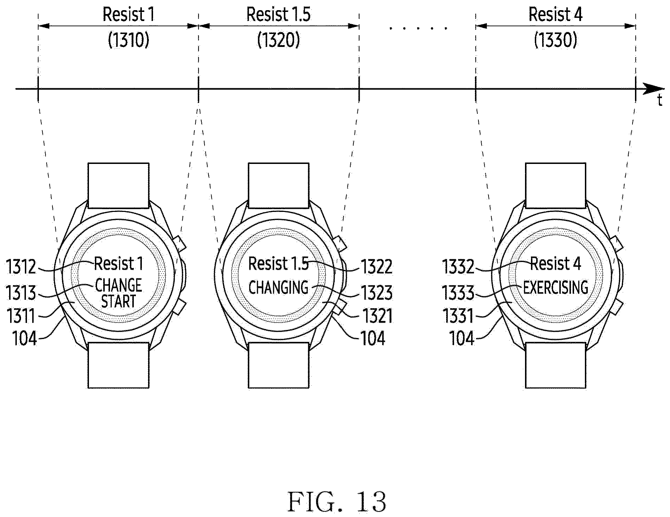

FIG. 13 illustrates an example of an operation of a wearable device and an external electronic device connected with the wearable device according to various embodiments.

Referring to FIG. 13, a processor 220 of a wearable device 101 may establish a connection with an external electronic device 103. The external electronic device 103 may include a display.

The processor 220 of the wearable device 101 may sequentially change an operation mode from a first operation mode (e.g., resist 1 mode) to a target operation mode (e.g., resist 4 mode). For example, after providing a notification, the processor 220 may obtain motion data of the user during an interval 1310. The processor 220 may identify whether a designated user input is received based on the motion data of the user obtained during the interval 1310. The processor 220 may change the operation mode of the wearable device 101 from the first operation mode (e.g., resist 1 mode) to the second operation mode (e.g., resist 1.5 mode) based on identifying that the designated user input is received. For example, the first operation mode may include a mode for outputting torque having values within a first designated range. The second operation mode may include a mode for outputting torque having values within a second designated range.

The processor 220 may identify whether the designated user input is received based on the motion data of the user obtained during an interval 1320. The processor 220 may change the operation mode of the wearable device 101 from the second operation mode to a third operation mode based on identifying that the designated user input is received.

The processor 220 may identify whether the designated user input is received for each interval (e.g., interval 1310 or interval 1320). For example, the processor 220 may identify whether the designated user input is received based on whether a moving velocity of the user within each interval is greater than or equal to a designated speed. For an example, the designated speed may be set equally for each interval. For another example, the designated speed may be set differently for each interval.

Within the interval 1310, the processor 220 may transmit information indicating to operate in the first operation mode (e.g., resist 1 mode) to the external electronic device 103. In addition, the processor 220 may transmit information indicating that it is scheduled to change the first operation mode to the target operation mode (e.g., resist 4 mode) to the external electronic device 103. The external electronic device 103 may display a screen 1311 within the interval 1310. The screen 1311 may include a visual object 1312 for representing the first operation mode, which is an operation mode within the interval 1310, and a visual object 1313 for representing that the operation mode of the wearable device 101 is scheduled to be changed from the first operation mode to the target operation mode.

Within the interval 1320, the processor 220 may transmit information indicating to operate in the second operation mode (e.g., resist 1.5 mode) to the external electronic device 103. In addition, the processor 220 may transmit information indicating that the operation mode is being changed to the target operation mode to the external electronic device 103. The external electronic device 103 may display a screen 1321 within the interval 1320. The screen 1321 may include a visual object 1322 for representing the second operation mode, which is an operation mode within the interval 1320, and a visual object 1323 for representing that the operation mode of the wearable device 101 is changing to the target operation mode.

After the interval 1320 has elapsed, the external electronic device 103 may receive a signal based on a change in the operation mode of the wearable device 101. The external electronic device 103 may display, on the screen 1321, a screen (not illustrated) in which the visual object for representing the operation mode of the wearable device 101 is changed.

In an interval 1330, the processor 220 may transmit information indicating to operate in the target operation mode (e.g., resist 4 mode) to the external electronic device 103. In addition, the processor 220 may transmit information indicating that the operation mode is operating by being changed to the target operation mode to the external electronic device 103. The external electronic device 103 may display a screen 1331 within the interval 1330. The screen 1331 may include a visual object 1332 for representing the third operation mode, which is the target operation mode within the interval 1330, and a visual object 1333 for representing that wearable device 101 is operating in the target operation mode.

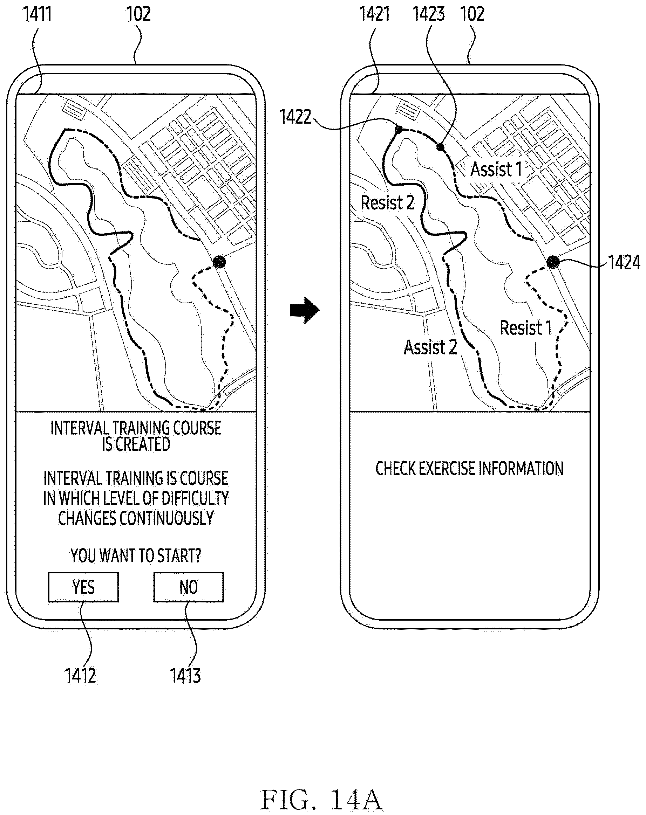

FIG. 14A illustrates an example of an operation of a wearable device and an external electronic device connected with the wearable device according to various embodiments.

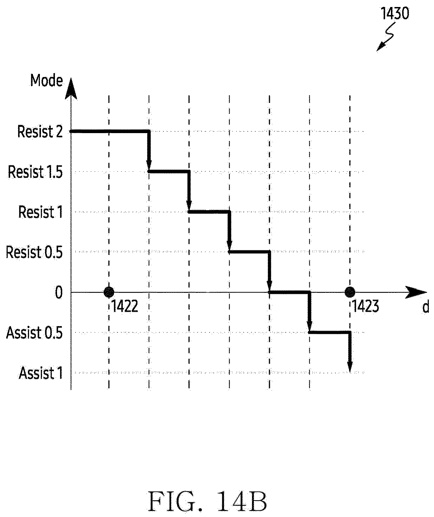

FIG. 14B illustrates another example of an operation of a wearable device and an external electronic device connected with the wearable device according to various embodiments.

Referring to FIG. 14A, a processor 220 of a wearable device 101 may establish a connection with an external electronic device 102. The external electronic device 102 may be used to control the wearable device 101. The external electronic device 102 may display a course for interval training on a screen 1411 in a state in which a connection is established with the wearable device 101. The external electronic device 102 may display information on the course for interval training on a designated area of the screen 1411. The external electronic device 102 may display a button 1412 for receiving a user input for starting interval training and a button 1413 for receiving a user input for displaying another course or other training.

The external electronic device 102 may receive the user input with respect to the button 1412. Based on the user input with respect to the button 1412, the external electronic device 102 may display a screen 1421. The screen 1421 may display information on a target operation mode of the wearable device 101 together with the course for interval training.

The processor 220 of the wearable device 101 may identify information on a location of the wearable device 101 through a GPS circuit. Since the user is in a state of wearing the wearable device 101, the processor 220 may identify information on the location of the user. The processor 220 may transmit information on the identified location of the user to the external electronic device 102. The external electronic device 102 may receive the information on the location of the user from the wearable device 101. The external electronic device 102 may provide the information on the identified location of the user to the user through a display of the external electronic device 102. For example, the external electronic device 102 may display a visual object 1424 for representing the location of the user on the screen 1421.

Referring to FIG. 14B, a graph 1430 illustrates a change in an operation mode of the wearable device 101 in a section between a point 1422 and a point 1423 of FIG. 14A. Horizontal axis of the graph 1430 represents a location (or distance). Vertical axis of the graph 1430 represents the operation mode of the wearable device 101.

At the point 1422, the wearable device 101 may be operated in a resist 2 mode. The point 1422 may include a starting location of a section in which the wearable device 101 is set to operate with a goal of an assist 1 mode.

At regular time intervals, the processor 220 of the wearable device 101 may gradually (or stepwise) change the operation mode. The processor 220 may change the operation mode of the wearable device 101 from the resist 2 mode to the assist 1 mode. At the point 1423, the wearable device 101 may be operated in the assist 1 mode.

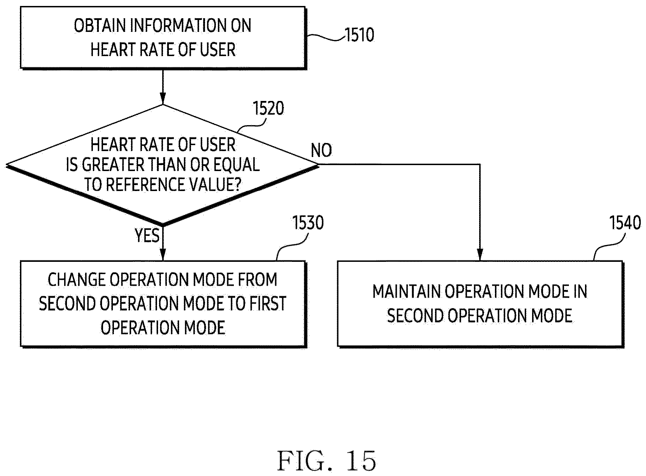

FIG. 15 is another flowchart for illustrating an operation of a wearable device according to various embodiments. Such a method may be executed by a wearable device 101 and a processor 220 of the wearable device 101 illustrated in FIGS. 2 and 3.

Referring to FIG. 15, operations 1510 to 1540 may be performed after operation 650 of FIG. 6 is performed. The processor 220 may set an operation mode of the wearable device 101 to a second operation mode changed from a first operation mode. The processor 220 may output torque having values within a second designated range that is changed from torque having values within a first designated range through an actuator 240.

In operation 1510, the processor 220 may obtain information on a heart rate of a user. For example, at least one sensor 230 may include an HRV sensor. The processor 220 may obtain information on the heart rate of the user through the at least one sensor 230.

In operation 1520, the processor 220 may identify whether the heart rate of the user is greater than or equal to a reference value based on the information on the heart rate of the user. The processor 220 may identify whether resist torque that is excessive to the user is outputted based on the heart rate of the user.

In operation 1530, in case that the heart rate of the user is greater than or equal to the reference value, the processor 220 may change the operation mode of the wearable device 101 from the second operation mode to the first operation mode. The processor 220 may change the torque having values within the second designated range to the torque having values within the first designated range. The processor 220 may change the operation mode of the wearable device 101 from the second operation mode to the first operation mode based on identifying that the heart rate of the user is greater than or equal to the reference value. The processor 220 may change the torque having values within the second designated range to the torque having values within the first designated range, based on identifying that the heart rate of the user is greater than or equal to the reference value. The processor 220 may provide a notification to the user for representing that the operation mode of the wearable device 101 has been changed again since the heart rate of the user has become too high.

In operation 1540, in case that the heart rate of the user is less than the reference value, the processor 220 may maintain the operation mode of the wearable device 101 from the second operation mode to the first operation mode. In case that the heart rate of the user is less than the reference value, the processor 220 may maintain outputting the torque having values within the second designated range. The processor 220 may maintain the operation mode of the wearable device 101 from the second operation mode to the first operation mode based on the heart rate of the user being identified as being less than the reference value. The processor 220 may maintain outputting the torque having values within the second designated range based on the heart rate of the user being identified as being less than the reference value.

A wearable device according to various embodiments may comprise at least one memory configured to store instructions, an actuator, at least one sensor, an outputting circuit, and at least one processor operably coupled with the at least one memory, the actuator, the at least one sensor, and the outputting circuit, wherein the at least one processor may be, when executing the instructions, configured to obtain, through the at least one sensor, motion data of a user wearing the wearable device, to set, based on the motion data, an operation mode of the wearable device to a first operation mode,

after setting the operation mode to the first operation mode, to provide, based on identifying a timing for providing a notification, the notification, after providing the notification, to identify whether a designated user input is received based on the motion data obtained through the at least one sensor during a designated time interval, and based on identifying that the designated user input being received, to change the operation mode from the first operation mode to a second operation mode.

According to an embodiment, the at least one processor may be, when executing the instructions, configured to identify a timing at which reference time is elapsed from a timing the operation mode is set to the first operation mode as the timing for providing the notification.

According to an embodiment, the at least one processor may be, when executing the instructions, configured to, based on identifying that the designated user input is not received, maintain the operation mode in the first operation mode.

The outputting circuit comprises two vibration motors, and wherein the at least one processor is, when executing the instructions, configured to provide, based on identifying that the reference time is elapsed, vibration using the vibration motor at a first intensity while a posture of a part of a body of the user is a first posture, and while the posture of the part of the body of the user is a second posture changed from the first posture, to provide vibration using the vibration motor at a second intensity greater than the first intensity.

According to an embodiment, the first posture may comprise a posture in which an angle of a hip joint of the user which changes according to walking of the user is a first angle, and wherein the second posture may comprise the posture in which the angle of the hip joint of the user which changes according to walking of the user is a second angle.

According to an embodiment, the at least one processor may be, when executing the instructions, configured to identify, based on the motion data of the user, information on stride length of the user, and to identify, based on the information of the stride length of the user, the reference time.

According to an embodiment, the wearable device may further comprise a communication circuit, and wherein the at least one processor may be, when executing the instructions, further configured to identify, based on the information on the stride length of the user and the reference time, a geographic location at which the operation mode is to be changed from the first operation mode to the second operation mode, and to transmit, to an external electronic device connected with the wearable device, a signal for providing the identified geographic location to the user.

According to an embodiment, the at least one processor may be, when executing the instructions, configured to identify a timing to change the operation mode after setting the operation mode to the first operation mode, and to identify, based on the identified timing, the timing for providing the notification.

According to an embodiment, the at least one processor may be, when executing the instructions, configured to identify, based on the motion data, a first moving velocity of the user, after providing the notification, to identify, based on the motion data obtained during the designated time interval, a second moving velocity of the user, and to identify, based on the second moving velocity being greater than or equal to the first moving velocity identified before the notification is provided, that the designated user input is received.

According to an embodiment, the at least one processor may be, when executing the instructions, further configured to change the operation mode from the second operation mode to a third operation mode distinct from the second operation mode, based on the motion data obtained after changing the operation mode from the first operation mode to the second operation mode.

According to an embodiment, the wearable device may further comprise a communication circuit, and wherein the at least one processor may be, when executing the instructions, further configured to identify other user input distinct from the designated user input from an external electronic device connected with the wearable device, in response to providing the notification, and based on the other user input, to maintain the operation mode in the first operation mode.

According to an embodiment, the wearable device may further comprise a communication circuit and a global positioning system (GPS) circuit, wherein the at least one processor may be, when executing the instructions, further configured to identify information on a location of the user, and to transmit the identified information on the location of the user to an external electronic device connected with the wearable device and wherein the identified information on the location of the user may be provided to the user through the external electronic device.

According to an embodiment, the at least one processor may be, when executing the instructions, further configured to provide other notification for guiding a motion of the user after changing the operation mode from the first operation mode to the second operation mode.

According to an embodiment, the at least one processor may be, when executing the instructions, further configured to obtain information on a heart rate of the user through the at least one sensor, to identify that the heart rate of the user is greater than or equal to the reference value based on the information of the heart rate of the user, and to change the operation mode from the second operation mode to the first operation mode based on identifying that the heart rate of the user is greater than or equal to the reference value.

According to an embodiment, the wearable device may further comprise a communication circuit, wherein the at least one processor may be, when executing the instructions, configured to transmit a signal for indicating the operation mode set to the first operation mode to an external electronic device connected with the wearable device, wherein the external electronic device may be configured to provide a visual object for representing the operation mode set to the first operation mode to the user.

According to an embodiment, the at least one sensor may comprise a motion sensor for identifying a movement of a waist of the user, wherein the at least one processor may be, when executing the instructions, configured to identify whether the designated user input is received, based on whether the movement of the waist of the user identified through the motion sensor during the designated time interval corresponds to a designated movement, after providing the notification.

According to an embodiment, the first operation mode may be set as one of a plurality of modes for the wearable device for outputting assist torque that acts in a direction to assist the movement of the user by using the actuator, wherein the second operation mode may be set as one of a plurality of modes for the wearable device for outputting resist torque that acts in a direction to resist the movement of the user by using the actuator.

According to an embodiment, the wearable device may further comprise a first support portion, a second support portion, and a connection portion rotatably connecting the second support portion to the first support portion through the actuator, wherein the actuator may be attached to the first support portion, wherein the second support portion may be rotated with respect to the first support portion through torque provided from the actuator.

A method of a wearable device according to various embodiments may comprise obtaining, through at least one sensor, motion data of a user wearing the wearable device, setting, based on the motion data, an operation mode of the wearable device to a first operation mode, after setting the operation mode to the first operation mode, providing, based on identifying a timing for providing a notification, the notification, after providing the notification, identifying whether a designated user input is received based on the motion data obtained through the at least one sensor during a designated time interval, and based on identifying that the designated user input being received, changing the operation mode from the first operation mode to a second operation mode.

A non-transitory computer readable storage medium according to various embodiments may store one or more programs comprising instructions, which, when being executed by at least one processor of a wearable device with an actuator, at least one sensor, and an outputting circuit, cause the wearable device to obtain, through the at least one sensor, motion data of a user wearing the wearable device, to set, based on the motion data, an operation mode of the wearable device to a first operation mode, after setting the operation mode to the first operation mode, to provide, based on identifying a timing for providing a notification, the notification, after providing the notification, to identify whether a designated user input is received based on the motion data obtained through the at least one sensor during a designated time interval, and based on identifying that the designated user input being received, to change the operation mode from the first operation mode to a second operation mode.

A wearable device (or an electronic device) according to various embodiments disclosed in the present disclosure may be various types of devices. The wearable devices (or electronic device) may include, for example, a portable communication device (e.g., smartphone), a computer device, a portable multimedia device, a portable medical device, a camera, or a home appliance device. The wearable device (or electronic device) according to the embodiment of the present disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The invention is defined by the appended claims.

## Claims

1. A wearable device (101) comprising:
at least one memory (210) configured to store instructions,
an actuator (240, 240-1, 240-2) configured to output a first torque to assist walking of a user of the wearable device or a second torque to resist the walking of the user;
at least one sensor (230);
an outputting circuit (250) comprising a first vibration motor (801) disposed for providing a vibration to a first side of a thigh of the user and a second vibration motor (802) disposed for providing a vibration to a second side of the thigh of the user, opposite to the first side; and
at least one processor (120, 220) operably coupled with the at least one memory (210), the actuator (240, 240-1, 240-2), the at least one sensor (230), and the outputting circuit (250), wherein the at least one processor (120, 220) is, when executing the instructions, configured to:
obtain (610), through the at least one sensor (230), walking data of the user wearing the wearable device (101),
set (620), based on the walking data, an operation mode of the wearable device (101) to a first operation mode for resisting the walking of the user through the actuator (240, 240-1, 240-2) providing the second torque,
after setting the operation mode to the first operation mode, identify a first timing at which the operation mode of the wearable device (101) is to be changed from the first operation mode to a second operation mode for assisting the walking of the user through the actuator (240, 240-1, 240-2) providing the first torque,
based on the first timing, identify a second timing for providing a notification that the operation mode of the wearable device (101) is to be changed from the first operation mode to the second operation mode, wherein the second timing is identified as a designated time before the first timing,
provide (630), at the second timing, the notification that the operation mode of the wearable device (101) is to be changed from the first operation mode to the second operation mode, wherein, for providing the notification, a vibration is provided via the first vibration motor (801) while the user is in a first posture related to the walking of the user and wherein a vibration is provided via the second vibration motor (802) while the user is in a second posture related to the walking of the user,
after providing the notification, identify (640) whether a designated user input is received based on the walking data obtained through the at least one sensor (230) during the designated time, and
based on identifying that the designated user input being received, change (650), at the first timing, the operation mode from the first operation mode to a second operation mode.

2. The wearable device (101) of claim 1, wherein the at least one processor (120, 220) is, when executing the instructions, configured to identify a timing at which reference time is elapsed from a timing when the operation mode is set to the first operation mode, as the second timing for providing the notification.

3. The wearable device (101) of claims 1 or 2, wherein the at least one processor (120, 220) is, when executing the instructions, further configured to, based on identifying that the designated user input is not received, maintain the operation mode in the first operation mode.

4. The wearable device (101) of claims 1 to 3, wherein the at least one processor (120, 220) is, when executing the instructions, further configured to,
identify an average stride length of the user during the designated time between the first timing and the second timing,
based on identifying that the average stride length of the user is greater than a designated stride length, identify that the designated user input is received.

5. The wearable device (101) of claim 1 to 4, wherein the first posture corresponds to forward movement of the thigh of the user,
wherein the second posture corresponds to backward movement of the thigh of the user,
wherein an intensity of the vibration provided via the first vibration motor (801) increases as the thigh is moved further forward, and
wherein an intensity of the vibration provided via the second vibration motor (802) increases as the thigh is moved further backward.

6. The wearable device (101) of any one of claims 1 to 5, wherein the at least one processor (120, 220) is, when executing the instructions, configured to:
identify, based on the walking data, information on stride length of the user, and
identify, based on information on the stride length of the user, the reference time.

7. The wearable device (101) of claim 6, wherein the wearable device (101) further comprises a communication circuit, and
wherein the at least one processor (120, 220) is, when executing the instructions, further configured to:
identify, based on the information on the stride length of the user and the reference time, a geographic location at which the operation mode is to be changed from the first operation mode to the second operation mode, and
transmit, to an external electronic device configured to provide a visual object superimposed on visible environment, a signal causing the external electronic device to display a line-shaped visual object (1020) superimposed on the identified geographic location.

8. The wearable device (101) of any one of claims 1 to 7, wherein the at least one processor is, when executing the instructions, configured to:
identify, based on the walking data, a first walking velocity of the user,
after providing the notification, identify, based on the walking data obtained during the designated time, a second walking velocity of the user, and
identify, based on the second walking velocity being greater than or equal to the first walking velocity identified before the notification is provided, that the designated user input is received.

9. The wearable device (101) of any one of claims 1 to 8, wherein the at least one processor (120, 220) is, when executing the instructions, further configured to, based on the walking data obtained after changing the operation mode from the first operation mode to the second operation mode, change the operation mode from the second operation mode to a third operation mode distinct from the second operation mode.

10. The wearable device (101) of any one of claims 1 to 9, wherein the wearable device (101) further comprises a communication circuit, and
wherein the at least one processor (120, 220) is, when executing the instructions, further configured to:
in response to providing the notification, identify other user input distinct from the designated user input from an external electronic device connected with the wearable device (101), and
based on the other user input, maintain the operation mode as the first operation mode.

11. The wearable device (101) of any one of claims 1 to 10, wherein the wearable device (101) further comprises:
a communication circuit, and
GPS (global positioning system) circuit;
wherein the at least one processor (120, 220) is, when executing the instructions, further configured to:
identify information on a location of the user, and
transmit the identified information on the location of the user to an external electronic device connected with the wearable device (101); and
wherein the identified information on the location of the user is provided to the user through the external electronic device.

12. The wearable device (101) of any one of claims 1 to 11, wherein the at least one processor (120, 220) is, when executing the instructions, further configured to provide other notification for guiding the walking of the user after changing the operation mode from the first operation mode to the second operation mode.

13. A method performed by a wearable device (101) comprising an actuator (240, 240-1, 240-2) configured to output a first torque to assist walking of a user of the wearable device or a second torque to resist the walking of the user, at least one sensor (230), and an outputting circuit (250) comprising a first vibration motor (801) disposed for providing a vibration to a first side of a thigh of the user and a second vibration motor (802) disposed for providing a vibration to a second side of the thigh of the user, opposite to the first side, comprising:
obtaining (610), through the at least one sensor (230), walking data of the user wearing the wearable device (101),
setting (620), based on the walking data, an operation mode of the wearable device (101) to a first operation mode for resisting the walking of the user through the actuator (240, 240-1, 240-2) providing the second torque,
after setting the operation mode to the first operation mode, identifying a first timing at which the operation mode of the wearable device (101) is to be changed from the first operation mode to a second operation mode for assisting the walking of the user through the actuator (240, 240-1, 240-2) providing the first torque,
based on the first timing, identifying a second timing for providing a notification that the operation mode of the wearable device (101) is to be changed from the first operation mode to the second operation mode, wherein the second timing is identified as a designated time before the first timing,
providing (630), at the second timing, the notification that the operation mode of the wearable device (101) is to be changed from the first operation mode to the second operation mode, wherein, for providing the notification, a vibration is provided via the first vibration motor (801) while the user is in a first posture related to the walking of the user and wherein a vibration is provided via the second vibration motor (802) while the user is in a second posture related to the walking of the user,
after providing the notification, identifying (640) whether a designated user input is received based on the walking data obtained through the at least one sensor (230) during the designated time, and
based on identifying that the designated user input being received, changing (650), at the first timing, the operation mode from the first operation mode to a second operation mode.

14. A non-transitory computer readable storage medium storing one or more programs, wherein the one or more programs comprising instructions, which, when being executed by at least one processor (120, 220) of a wearable device (101) comprising an actuator (240, 240-1, 240-2) configured to output a first torque to assist walking of a user of the wearable device or a second torque to resist the walking of the user, at least one sensor (230), and an outputting circuit (250) comprising a first vibration motor (801) disposed for providing a vibration to a first side of a thigh of the user and a second vibration motor (802) disposed for providing a vibration to a second side of the thigh of the user, opposite to the first side, cause the wearable device (101) to:
obtain (610), through the at least one sensor (230), walking data of a user wearing the wearable device (101),
set (620), based on the walking data, an operation mode of the wearable device (101) to a first operation mode for resisting the walking of the user through the actuator (240, 240-1, 240-2) providing the second torque,
after setting the operation mode to the first operation mode, identify a first timing at which the operation mode of the wearable device (101) is to be changed from the first operation mode to a second operation mode for assisting the walking of the user through the actuator (240, 240-1, 240-2) providing the first torque,
based on the first timing, identify a second timing for providing a notification that the operation mode of the wearable device (101) is to be changed from the first operation mode to the second operation mode, wherein the second timing is identified as a designated time before the first timing,
provide (630), at the second timing, the notification that the operation mode of the wearable device (101) is to be changed from the first operation mode to the second operation mode, wherein, for providing the notification, a vibration is provided via the first vibration motor (801) while the user is in a first posture related to the walking of the user and wherein a vibration is provided via the second vibration motor (802) while the user is in a second posture related to the walking of the user,
after providing the notification, identify (640) whether a designated user input is received based on the walking data obtained through the at least one sensor (230) during the designated time, and
based on identifying that the designated user input being received, change (650), at the first timing, the operation mode from the first operation mode to a second operation mode.

## Patentansprüche

1. Tragbare Vorrichtung (101), umfassend:
mindestens einen Speicher (210), der konfiguriert ist, um Anweisungen zu speichern,
einen Aktuator (240, 240-1, 240-2), der konfiguriert ist, um ein erstes Drehmoment auszugeben, um das Gehen eines Benutzers der tragbaren Vorrichtung zu unterstützen, oder ein zweites Drehmoment, um dem Gehen des Benutzers entgegenzuwirken;
mindestens einen Sensor (230);
eine Ausgabeschaltung (250), umfassend einen ersten Vibrationsmotor (801), der so angeordnet ist, dass er eine erste Seite eines Oberschenkels des Benutzers mit einer Vibration versorgt, und einen zweiten Vibrationsmotor (802), der so angeordnet ist, dass er eine zweite Seite des Oberschenkels des Benutzers, die der ersten Seite gegenüberliegt, mit einer Vibration versorgt; und
mindestens einen Prozessor (120, 220), der betriebsmäßig mit dem mindestens einen Speicher (210), dem Aktuator (240, 240-1, 240-2), dem mindestens einen Sensor (230) und der Ausgabeschaltung (250) gekoppelt ist, wobei der mindestens eine Prozessor (120, 220) beim Ausführen der Anweisungen konfiguriert ist zum:
Erhalten (610) von Gehdaten des Benutzers, der die tragbare Vorrichtung (101) trägt, über den mindestens einen Sensor (230),
Einstellen (620), basierend auf den Gehdaten, eines Betriebsmodus der tragbaren Vorrichtung (101) auf einen ersten Betriebsmodus, um dem Gehen des Benutzers durch den Aktuator (240, 240-1, 240-2), der das zweite Drehmoment bereitstellt, entgegenzuwirken,
nach dem Einstellen des Betriebsmodus auf den ersten Betriebsmodus Identifizieren eines ersten Zeitpunkts, zu dem der Betriebsmodus der tragbaren Vorrichtung (101) von dem ersten Betriebsmodus in einen zweiten Betriebsmodus zum Unterstützen des Gehens des Benutzers durch den Aktuator (240, 240-1, 240-2), der das erste Drehmoment bereitstellt, geändert werden soll,
basierend auf dem ersten Zeitpunkt Identifizieren eines zweiten Zeitpunkts zum Bereitstellen einer Benachrichtigung, dass der Betriebsmodus der tragbaren Vorrichtung (101) von dem ersten Betriebsmodus in den zweiten Betriebsmodus geändert werden soll, wobei der zweite Zeitpunkt als eine bestimmte Zeit vor dem ersten Zeitpunkt identifiziert wird,
Bereitstellen (630), zum zweiten Zeitpunkt, der Benachrichtigung, dass der Betriebsmodus der tragbaren Vorrichtung (101) von dem ersten Betriebsmodus in den zweiten Betriebsmodus geändert werden soll, wobei zum Bereitstellen der Benachrichtigung eine Vibration über den ersten Vibrationsmotor (801) bereitgestellt wird, während sich der Benutzer in einer ersten Haltung befindet, die mit dem Gehen des Benutzers in Zusammenhang steht, und wobei eine Vibration über den zweiten Vibrationsmotor (802) bereitgestellt wird, während sich der Benutzer in einer zweiten Haltung befindet, die mit dem Gehen des Benutzers in Zusammenhang steht,
nach dem Bereitstellen der Benachrichtigung Identifizieren (640), ob eine bestimmte Benutzereingabe empfangen wurde, basierend auf den Gehdaten, die durch den mindestens einen Sensor (230) während der bestimmten Zeit erhalten wurden, und
basierend auf dem Identifizieren, dass die bestimmte Benutzereingabe empfangen wurde, Ändern (650) des Betriebsmodus vom ersten Betriebsmodus in einen zweiten Betriebsmodus zum ersten Zeitpunkt.

2. Tragbare Vorrichtung (101) nach Anspruch 1, wobei der mindestens eine Prozessor (120, 220) beim Ausführen der Anweisungen so konfiguriert ist, dass er einen Zeitpunkt, zu dem die Referenzzeit von einem Zeitpunkt an verstrichen ist, zu dem der Betriebsmodus auf den ersten Betriebsmodus eingestellt ist, als zweiten Zeitpunkt zum Bereitstellen der Benachrichtigung identifiziert.

3. Tragbare Vorrichtung (101) nach Anspruch 1 oder 2, wobei der mindestens eine Prozessor (120, 220) beim Ausführen der Anweisungen ferner so konfiguriert ist, dass er basierend auf dem Identifizieren, dass die bestimmte Benutzereingabe nicht empfangen wurde, den Betriebsmodus im ersten Betriebsmodus beibehält.

4. Tragbare Vorrichtung (101) nach den Ansprüchen 1 bis 3, wobei der mindestens eine Prozessor (120, 220) beim Ausführen der Anweisungen ferner konfiguriert ist zum:
Identifizieren einer durchschnittlichen Schrittlänge des Benutzers während der bestimmten Zeit zwischen dem ersten Zeitpunkt und dem zweiten Zeitpunkt,
basierend auf dem Identifizieren, dass die durchschnittliche Schrittlänge des Benutzers größer ist als eine bestimmte Schrittlänge, Identifizieren, dass die bestimmte Benutzereingabe empfangen wurde.

5. Tragbare Vorrichtung (101) nach Anspruch 1 bis 4, wobei die erste Haltung einer Vorwärtsbewegung des Oberschenkels des Benutzers entspricht,
wobei die zweite Haltung einer Rückwärtsbewegung des Oberschenkels des Benutzers entspricht,
wobei die Intensität der über den ersten Vibrationsmotor (801) bereitgestellten Vibration zunimmt, wenn der Oberschenkel weiter nach vorne bewegt wird, und
wobei die Intensität der über den zweiten Vibrationsmotor (802) bereitgestellten Vibration zunimmt, wenn der Oberschenkel weiter nach hinten bewegt wird.

6. Tragbare Vorrichtung (101) nach einem der Ansprüche 1 bis 5, wobei der mindestens eine Prozessor (120, 220) beim Ausführen der Anweisungen konfiguriert ist zum:
basierend auf den Gehdaten Identifizieren von Informationen über die Schrittlänge des Benutzers, und
basierend auf Informationen über die Schrittlänge des Benutzers Identifizieren der Referenzzeit.

7. Tragbare Vorrichtung (101) nach Anspruch 6, wobei die tragbare Vorrichtung (101) ferner eine Kommunikationsschaltung umfasst, und
wobei der mindestens eine Prozessor (120, 220) beim Ausführen der Anweisungen ferner konfiguriert ist zum:
basierend auf den Informationen über die Schrittlänge des Benutzers und die Referenzzeit Identifizieren eines geographischen Standorts, an dem der Betriebsmodus von dem ersten Betriebsmodus in den zweiten Betriebsmodus geändert werden soll, und
Übertragen, an eine externe elektronische Vorrichtung, die so konfiguriert ist, dass sie ein visuelles Objekt liefert, das der sichtbaren Umgebung überlagert ist, eines Signals, das die externe elektronische Vorrichtung veranlasst, ein linienförmiges visuelles Objekt (1020) anzuzeigen, das dem identifizierten geografischen Standort überlagert ist.

8. Tragbare Vorrichtung (101) nach einem der Ansprüche 1 bis 7, wobei der mindestens eine Prozessor beim Ausführen der Anweisungen konfiguriert ist zum:
basierend auf den Gehdaten Identifizieren einer ersten Gehgeschwindigkeit des Benutzers,
nach dem Bereitstellen der Benachrichtigung Identifizieren, basierend auf den Gehdaten, die während der bestimmten Zeit erhalten wurden, einer zweiten Gehgeschwindigkeit des Benutzers, und
Identifizieren, basierend darauf, dass die zweite Gehgeschwindigkeit größer oder gleich der ersten Gehgeschwindigkeit ist, bevor die Benachrichtigung bereitgestellt wird, dass die bestimmte Benutzereingabe empfangen wurde.

9. Tragbare Vorrichtung (101) nach einem der Ansprüche 1 bis 8, wobei der mindestens eine Prozessor (120, 220) beim Ausführen der Anweisungen ferner so konfiguriert ist, dass er basierend auf den Gehdaten, die nach dem Ändern des Betriebsmodus vom ersten Betriebsmodus in den zweiten Betriebsmodus erhalten wurden, den Betriebsmodus vom zweiten Betriebsmodus in einen dritten, vom zweiten Betriebsmodus verschiedenen Betriebsmodus ändert.

10. Tragbare Vorrichtung (101) nach einem der Ansprüche 1 bis 9, wobei die tragbare Vorrichtung (101) ferner eine Kommunikationsschaltung umfasst, und
wobei der mindestens eine Prozessor (120, 220) beim Ausführen der Anweisungen ferner konfiguriert ist zum:
als Reaktion auf das Bereitstellen der Benachrichtigung Identifizieren einer anderen Benutzereingabe, die sich von den bestimmten Benutzereingaben unterscheidet, von einer externen elektronischen Vorrichtung, die mit der tragbaren Vorrichtung (101) verbunden ist, und
basierend auf der anderen Benutzereingabe, Beibehalten des Betriebsmodus als ersten Betriebsmodus,

11. Tragbare Vorrichtung (101) nach einem der Ansprüche 1 bis 10, wobei die tragbare Vorrichtung (101) ferner umfasst:
eine Kommunikationsschaltung, und
eine GPS-(Global Positioning System)-Schaltung;
wobei der mindestens eine Prozessor (120, 220) beim Ausführen der Anweisungen ferner konfiguriert ist zum:
Identifizieren von Informationen über einen Standort des Benutzers, und
Übertragen der identifizierten Informationen über den Standort des Benutzers an eine externe elektronische Vorrichtung, die mit der tragbaren Vorrichtung (101) verbunden ist; und
wobei die identifizierten Informationen über den Standort des Benutzers dem Benutzer über die externe elektronische Vorrichtung bereitgestellt werden.

12. Tragbare Vorrichtung (101) nach einem der Ansprüche 1 bis 11, wobei der mindestens eine Prozessor (120, 220) beim Ausführen der Anweisungen ferner so konfiguriert ist, dass er nach dem Ändern des Betriebsmodus vom ersten Betriebsmodus zum zweiten Betriebsmodus eine andere Benachrichtigung zum Anleiten des Gehens des Benutzers bereitstellt.

13. Verfahren, das von einer tragbaren Vorrichtung (101) durchgeführt wird, die einen Aktuator (240, 240-1, 240-2), der so konfiguriert ist, dass er ein erstes Drehmoment ausgibt, um das Gehen eines Benutzers der tragbaren Vorrichtung zu unterstützen, oder ein zweites Drehmoment, um dem Gehen des Benutzers entgegenzuwirken, mindestens einen Sensor (230) und eine Ausgabeschaltung (250), die einen ersten Vibrationsmotor (801) umfasst, der so angeordnet ist, dass er eine erste Seite eines Oberschenkels des Benutzers mit einer Vibration versorgt, und einen zweiten Vibrationsmotor (802), der so angeordnet ist, dass er eine zweite Seite des Oberschenkels des Benutzers, die der ersten Seite gegenüberliegt, mit einer Vibration versorgt, umfasst; und
Erhalten (610) von Gehdaten des Benutzers, der die tragbare Vorrichtung (101) trägt, durch den mindestens einen Sensor (230),
Einstellen (620), basierend auf den Gehdaten, eines Betriebsmodus der tragbaren Vorrichtung (101) auf einen ersten Betriebsmodus, um dem Gehen des Benutzers durch den Aktuator (240, 240-1, 240-2), der das zweite Drehmoment bereitstellt, entgegenzuwirken,
nach dem Einstellen des Betriebsmodus auf den ersten Betriebsmodus Identifizieren eines ersten Zeitpunkts, zu dem der Betriebsmodus der tragbaren Vorrichtung (101) von dem ersten Betriebsmodus in einen zweiten Betriebsmodus zum Unterstützen des Gehens des Benutzers durch den Aktuator (240, 240-1, 240-2), der das erste Drehmoment bereitstellt, geändert werden soll,
basierend auf dem ersten Zeitpunkt Identifizieren eines zweiten Zeitpunkts zum Bereitstellen einer Benachrichtigung, dass der Betriebsmodus der tragbaren Vorrichtung (101) von dem ersten Betriebsmodus in den zweiten Betriebsmodus geändert werden soll, wobei der zweite Zeitpunkt als eine bestimmte Zeit vor dem ersten Zeitpunkt identifiziert wird,
Bereitstellen (630), zum zweiten Zeitpunkt, der Benachrichtigung, dass der Betriebsmodus der tragbaren Vorrichtung (101) von dem ersten Betriebsmodus in den zweiten Betriebsmodus geändert werden soll, wobei zum Bereitstellen der Benachrichtigung eine Vibration über den ersten Vibrationsmotor (801) bereitgestellt wird, während sich der Benutzer in einer ersten Haltung befindet, die mit dem Gehen des Benutzers in Zusammenhang steht, und wobei eine Vibration über den zweiten Vibrationsmotor (802) bereitgestellt wird, während sich der Benutzer in einer zweiten Haltung befindet, die mit dem Gehen des Benutzers in Zusammenhang steht,
nach dem Bereitstellen der Benachrichtigung Identifizieren (640), ob eine bestimmte Benutzereingabe empfangen wurde, basierend auf den Gehdaten, die durch den mindestens einen Sensor (230) während der bestimmten Zeit erhalten wurden, und
basierend auf dem Identifizieren, dass die bestimmte Benutzereingabe empfangen wurde, Ändern (650) des Betriebsmodus vom ersten Betriebsmodus in einen zweiten Betriebsmodus zum ersten Zeitpunkt.

14. Nicht-transitorisches computerlesbares Speichermedium, das ein oder mehrere Programme speichert, wobei das eine oder die mehreren Programme, die Anweisungen umfassen, die, wenn sie von mindestens einem Prozessor (120, 220) einer tragbaren Vorrichtung (101) ausgeführt werden, die einen Aktuator (240, 240-1, 240-2), der konfiguriert ist, um ein erstes Drehmoment auszugeben, um das Gehen eines Benutzers der tragbaren Vorrichtung zu unterstützen, oder ein zweites Drehmoment auszugeben, um dem Gehen des Benutzers entgegenzuwirken, mindestens einen Sensor (230) und eine Ausgabeschaltung (250) umfassend einen ersten Vibrationsmotor (801), der angeordnet ist, um eine erste Seite eines Oberschenkels des Benutzers mit einer Vibration zu versorgen, und einen zweiten Vibrationsmotor (802), der angeordnet ist, um eine zweite Seite des Oberschenkels des Benutzers, die der ersten Seite entgegengesetzt ist, mit einer Vibration zu versorgen, umfasst, die tragbare Vorrichtung (101) veranlassen zum:
Erhalten (610) von Gehdaten eines Benutzers, der die tragbare Vorrichtung (101) trägt, durch den mindestens einen Sensor (230),
Einstellen (620), basierend auf den Gehdaten, eines Betriebsmodus der tragbaren Vorrichtung (101) auf einen ersten Betriebsmodus, um dem Gehen des Benutzers durch den Aktuator (240, 240-1, 240-2), der das zweite Drehmoment bereitstellt, entgegenzuwirken,
nach dem Einstellen des Betriebsmodus auf den ersten Betriebsmodus Identifizieren eines ersten Zeitpunkts, zu dem der Betriebsmodus der tragbaren Vorrichtung (101) von dem ersten Betriebsmodus in einen zweiten Betriebsmodus zum Unterstützen des Gehens des Benutzers durch den Aktuator (240, 240-1, 240-2), der das erste Drehmoment bereitstellt, geändert werden soll,
basierend auf dem ersten Zeitpunkt Identifizieren eines zweiten Zeitpunkts zum Bereitstellen einer Benachrichtigung, dass der Betriebsmodus der tragbaren Vorrichtung (101) von dem ersten Betriebsmodus in den zweiten Betriebsmodus geändert werden soll, wobei der zweite Zeitpunkt als eine bestimmte Zeit vor dem ersten Zeitpunkt identifiziert wird,
Bereitstellen (630), zum zweiten Zeitpunkt, der Benachrichtigung, dass der Betriebsmodus der tragbaren Vorrichtung (101) von dem ersten Betriebsmodus in den zweiten Betriebsmodus geändert werden soll, wobei zum Bereitstellen der Benachrichtigung eine Vibration über den ersten Vibrationsmotor (801) bereitgestellt wird, während sich der Benutzer in einer ersten Haltung befindet, die mit dem Gehen des Benutzers in Zusammenhang steht, und wobei eine Vibration über den zweiten Vibrationsmotor (802) bereitgestellt wird, während sich der Benutzer in einer zweiten Haltung befindet, die mit dem Gehen des Benutzers in Zusammenhang steht,
nach dem Bereitstellen der Benachrichtigung Identifizieren (640), ob eine bestimmte Benutzereingabe basierend auf den Gehdaten, die durch den mindestens einen Sensor (230) während der bestimmten Zeit erhalten wurden, empfangen wurde, und
basierend auf dem Identifizieren, dass die bestimmte Benutzereingabe empfangen wurde, Ändern (650) des Betriebesmodus vom ersten Betriebsmodus in einen zweiten Betriebsmodus zum ersten Zeitpunkt.

## Revendications

1. Dispositif portable (101), comprenant :
au moins une mémoire (210) configurée pour stocker des instructions,
un actionneur (240, 240-1, 240-2) configuré pour délivrer un premier couple afin d'assister la marche d'un utilisateur du dispositif portable ou un deuxième couple afin de résister à la marche de l'utilisateur ;
au moins un capteur (230) ;
un circuit de sortie (250) comprenant un premier moteur de vibration (801) disposé pour fournir une vibration à un premier côté de la cuisse de l'utilisateur et un deuxième moteur de vibration (802) disposé pour fournir une vibration à un deuxième côté de la cuisse de l'utilisateur, opposé au premier côté ; et
au moins un processeur (120, 220) couplé de manière opérationnelle avec l'au moins une mémoire (210), l'actionneur (240, 240-1, 240-2), au moins un capteur (230), et le circuit de sortie (250), dans lequel l'au moins un processeur (120, 220) est, lors de l'exécution des instructions, configuré pour :
obtenir (610), par l'intermédiaire de l'au moins un capteur (230), des données de marche de l'utilisateur portant le dispositif portable (101),
régler (620), en se basant sur les données de marche, un mode de fonctionnement du dispositif portable (101) sur un premier mode de fonctionnement pour résister à la marche de l'utilisateur par l'intermédiaire de l'actionneur (240, 240-1, 240-2) fournissant le deuxième couple,
après avoir réglé le mode de fonctionnement sur le premier mode de fonctionnement, identifier un premier moment auquel le mode de fonctionnement du dispositif portable (101) doit passer du premier mode de fonctionnement à un deuxième mode de fonctionnement pour assister la marche de l'utilisateur par l'intermédiaire de l'actionneur (240, 240-1, 240-2) fournissant le premier couple,
en se basant sur le premier moment, identifier un deuxième moment pour fournir une notification indiquant que le mode de fonctionnement du dispositif portable (101) doit passer du premier mode de fonctionnement au deuxième mode de fonctionnement, dans lequel le deuxième moment est identifié comme un moment désigné avant le premier moment,
fournir (630), au deuxième moment, la notification que le mode de fonctionnement du dispositif portable (101) doit passer du premier mode de fonctionnement au deuxième mode de fonctionnement, dans lequel, pour fournir la notification, une vibration est fournie via le premier moteur de vibration (801) alors que l'utilisateur est dans une première posture liée à la marche de l'utilisateur et dans lequel une vibration est fournie via le deuxième moteur de vibration (802) alors que l'utilisateur est dans une deuxième posture liée à la marche de l'utilisateur,
après avoir fourni la notification, identifier (640) si une entrée d'utilisateur désignée est reçue sur la base des données de marche obtenues par l'intermédiaire de l'au moins un capteur (230) pendant le temps désigné, et
en se basant sur l'identification que l'entrée utilisateur désignée a été reçue, changer (650), au premier moment, le mode de fonctionnement du premier mode de fonctionnement à un deuxième mode de fonctionnement.

2. Dispositif portable (101) de la revendication 1, dans lequel l'au moins un processeur (120, 220) est, lors de l'exécution des instructions, configuré pour identifier un moment où le temps de référence est écoulé à partir d'un moment où le mode de fonctionnement est réglé sur le premier mode de fonctionnement, comme le deuxième moment pour fournir la revendication.

3. Dispositif portable (101) des revendications 1 ou 2, dans lequel l'au moins un processeur (120, 220) est, lors de l'exécution des instructions, en outre configuré pour, en se basant sur l'identification que l'entrée utilisateur désignée n'est pas reçue, maintenir le mode de fonctionnement dans le premier mode de fonctionnement.

4. Dispositif portable (101) selon les revendications 1 à 3, dans lequel l'au moins un processeur (120, 220), lors de l'exécution des instructions, est en outre configuré pour,
identifier une longueur de pas moyenne de l'utilisateur pendant le temps désigné entre le premier moment et le deuxième moment,
en se basant sur l'identification du fait que la longueur de pas moyenne de l'utilisateur est supérieure à une longueur de pas désignée, identifier que l'entrée d'utilisateur désignée est reçue.

5. Dispositif portable (101) des revendications 1 à 4, dans lequel la première posture correspond à un mouvement vers l'avant de la cuisse de l'utilisateur,
dans lequel la deuxième posture correspond à un mouvement vers l'arrière de la cuisse de l'utilisateur,
dans lequel une intensité de la vibration fournie par le premier moteur de vibration (801) augmente au fur et à mesure que la cuisse est déplacée vers l'avant, et
dans lequel une intensité de la vibration fournie par le deuxième moteur de vibration (802) augmente au fur et à mesure que la cuisse est déplacée vers l'arrière.

6. Dispositif portable (101) selon l'une quelconque des revendications 1 à 5, dans lequel l'au moins un processeur (120, 220), lors de l'exécution des instructions, est configuré pour :
identifier, en se basant sur les données de marche, des informations sur la longueur de pas de l'utilisateur, et
identifier, en se basant sur les informations relatives à la longueur de pas de l'utilisateur, le temps de référence.

7. Dispositif portable (101) selon la revendication 6, dans lequel le dispositif portable (101) comprend en outre un circuit de communication, et
dans lequel l'au moins un processeur (120, 220) est, lors de l'exécution des instructions, en outre configuré pour :
identifier, en se basant sur les informations sur la longueur de pas de l'utilisateur et sur le temps de référence, un lieu géographique où le mode de fonctionnement doit passer du premier mode de fonctionnement au deuxième mode de fonctionnement, et
transmettre, à un dispositif électronique externe configuré pour fournir un objet visuel superposé à un environnement visible, un signal amenant le dispositif électronique externe à afficher un objet visuel en forme de ligne (1020) superposé au lieu géographique identifié.

8. Dispositif portable (101) selon l'une quelconque des revendications 1 à 7, dans lequel l'au moins un processeur est, lors de l'exécution des instructions, configuré pour :
identifier, en se basant sur les données de marche, une première vitesse de marche de l'utilisateur,
après avoir fourni la notification, identifier, en se basant sur les données de marche obtenues pendant le temps désigné, une deuxième vitesse de marche de l'utilisateur, et
identifier, en se basant sur le fait que la deuxième vitesse de marche est supérieure ou égale à la première vitesse de marche identifiée avant que la notification ne soit fournie, que l'entrée d'utilisateur désignée est reçue.

9. Dispositif portable (101) de l'une quelconque des revendications 1 à 8, dans lequel l'au moins un processeur (120, 220) est, lors de l'exécution des instructions, en outre configuré pour, sur la base des données de marche obtenues après le passage du mode de fonctionnement du premier mode de fonctionnement au deuxième mode de fonctionnement, passer du deuxième mode de fonctionnement à un troisième mode de fonctionnement distinct du deuxième mode de fonctionnement.

10. Dispositif portable (101) de l'une des revendications 1 à 9, dans lequel le dispositif portable (101) comprend en outre un circuit de communication, et
dans lequel l'au moins un processeur (120, 220) est, lors de l'exécution des instructions, en outre configuré pour :
en réponse à la fourniture de la notification, identifier une autre entrée d'utilisateur distincte de l'entrée d'utilisateur désignée provenant d'un dispositif électronique externe connecté au dispositif portable (101), et
en se basant sur l'autre entrée d'utilisateur, maintenir le mode de fonctionnement comme premier mode de fonctionnement.

11. Dispositif portable (101) selon l'une quelconque des revendications 1 à 10, dans lequel le dispositif portable (101) comprend en outre :
un circuit de communication, et
un circuit GPS (système de positionnement global) ;
dans lequel l'au moins un processeur (120, 220) est, lors de l'exécution des instructions, en outre configuré pour :
identifier des informations sur un lieu de l'utilisateur, et
transmettre les informations identifiées sur le lieu de l'utilisateur à un dispositif électronique externe connecté au dispositif portable (101) ; et
dans lequel les informations identifiées sur le lieu de l'utilisateur sont fournies à l'utilisateur par l'intermédiaire du dispositif électronique externe.

12. Dispositif portable (101) de l'une quelconque des revendications 1 à 11, dans lequel l'au moins un processeur (120, 220) est, lors de l'exécution des instructions, en outre configuré pour fournir une autre notification pour guider la marche de l'utilisateur après le changement du mode de fonctionnement du premier mode de fonctionnement au deuxième mode de fonctionnement.

13. Procédé exécuté par un dispositif portable (101) comprenant un actionneur (240, 240-1, 240-2) configuré pour délivrer un premier couple pour assister la marche d'un utilisateur du dispositif portable ou un deuxième couple pour résister à la marche de l'utilisateur, au moins un capteur (230), et un circuit de sortie (250) comprenant un premier moteur de vibration (801) disposé pour fournir une vibration à un premier côté d'une cuisse de l'utilisateur et un deuxième moteur de vibration (802) disposé pour fournir une vibration à un deuxième côté de la cuisse de l'utilisateur, à l'opposé du premier côté, comprenant :
obtenir (610), par l'intermédiaire de l'au moins un capteur (230), des données de marche de l'utilisateur portant le dispositif portable (101),
régler (620), en se basant sur les données de marche, un mode de fonctionnement du dispositif portable (101) sur un premier mode de fonctionnement pour résister à la marche de l'utilisateur par l'intermédiaire de l'actionneur (240, 240-1, 240-2) fournissant le deuxième couple,
après avoir réglé le mode de fonctionnement sur le premier mode de fonctionnement, identifier un premier moment auquel le mode de fonctionnement du dispositif portable (101) doit passer du premier mode de fonctionnement à un deuxième mode de fonctionnement pour assister la marche de l'utilisateur par l'intermédiaire de l'actionneur (240, 240-1, 240-2) fournissant le premier couple,
en se basant sur le premier moment, identifier un deuxième moment pour fournir une notification indiquant que le mode de fonctionnement du dispositif portable (101) doit passer du premier mode de fonctionnement au deuxième mode de fonctionnement, dans lequel le deuxième moment est identifié comme un moment désigné avant le premier moment,
fournir (630), au deuxième moment, la notification que le mode de fonctionnement du dispositif portable (101) doit passer du premier mode de fonctionnement au deuxième mode de fonctionnement, dans lequel, pour fournir la notification, une vibration est fournie via le premier moteur de vibration (801) alors que l'utilisateur est dans une première posture liée à la marche de l'utilisateur et dans lequel une vibration est fournie via le deuxième moteur de vibration (802) alors que l'utilisateur est dans une deuxième posture liée à la marche de l'utilisateur,
après avoir fourni la notification, identifier (640) si une entrée d'utilisateur désignée est reçue sur la base des données de marche obtenues par l'intermédiaire de l'au moins un capteur (230) pendant le temps désigné, et
en se basant sur l'identification que l'entrée utilisateur désignée a été reçue, changer (650), au premier moment, le mode de fonctionnement du premier mode de fonctionnement à un deuxième mode de fonctionnement.

14. Support de stockage lisible par ordinateur non transitoire stockant un ou plusieurs programmes, dans lequel l'un ou les plusieurs programmes comprennent des instructions qui, lorsqu'elles sont exécutées par au moins un processeur (120, 220) d'un dispositif portable (101) comprenant un actionneur (240, 240-1, 240-2) configuré pour émettre un premier couple afin d'aider la marche d'un utilisateur du dispositif portable ou un deuxième couple afin de résister à la marche de l'utilisateur, au moins un capteur (230), et un circuit de sortie (250) comprenant un premier moteur de vibration (801) disposé pour fournir une vibration à un premier côté d'une cuisse de l'utilisateur et un deuxième moteur de vibration (802) disposé pour fournir une vibration à un deuxième côté de la cuisse de l'utilisateur, opposé au premier côté, amènent le dispositif portable (101) à :
obtenir (610), par l'intermédiaire de l'au moins un capteur (230), des données de marche d'un utilisateur portant le dispositif portable (101),
régler (620), en se basant sur les données de marche, un mode de fonctionnement du dispositif portable (101) sur un premier mode de fonctionnement pour résister à la marche de l'utilisateur par l'intermédiaire de l'actionneur (240, 240-1, 240-2) fournissant le deuxième couple,
après avoir réglé le mode de fonctionnement sur le premier mode de fonctionnement, identifier un premier moment auquel le mode de fonctionnement du dispositif portable (101) doit passer du premier mode de fonctionnement à un deuxième mode de fonctionnement pour assister la marche de l'utilisateur par l'intermédiaire de l'actionneur (240, 240-1, 240-2) fournissant le premier couple,
en se basant sur le premier moment, identifier un deuxième moment pour fournir une notification indiquant que le mode de fonctionnement du dispositif portable (101) doit passer du premier mode de fonctionnement au deuxième mode de fonctionnement, dans lequel le deuxième moment est identifié comme un moment désigné avant le premier moment,
fournir (630), au deuxième moment, la notification que le mode de fonctionnement du dispositif portable (101) doit passer du premier mode de fonctionnement au deuxième mode de fonctionnement, dans lequel, pour fournir la notification, une vibration est fournie via le premier moteur de vibration (801) alors que l'utilisateur est dans une première posture liée à la marche de l'utilisateur et dans lequel une vibration est fournie via le deuxième moteur de vibration (802) alors que l'utilisateur est dans une deuxième posture liée à la marche de l'utilisateur,
après avoir fourni la notification, identifier (640) si une entrée d'utilisateur désignée est reçue sur la base des données de marche obtenues par l'intermédiaire de l'au moins un capteur (230) pendant le temps désigné, et
en se basant sur l'identification que l'entrée utilisateur désignée a été reçue, changer (650), au premier moment, le mode de fonctionnement du premier mode de fonctionnement à un deuxième mode de fonctionnement.
